# EUROPEAN PATENT APPLICATION

(11) **EP 4 835 825 A1**
(43) Date of publication of application: **04.11.2026**
(21) Application number: 25846892.5
(22) Date of filing: 30.06.2025
(51) Int. Cl.: G06T 11/00

(54) **IMAGE PROCESSING AND MODEL TRAINING METHOD AND APPARATUS, DEVICE, STORAGE MEDIUM, AND PROGRAM**

(30) Priority: 31.07.2024 CN 202411041789
(71) Applicant: Tencent Technology (Shenzhen) Company Limited, Shenzhen, Guangdong 518057 (CN)
(72) Inventor: ZHANG, Keyue, Shenzhen, Guangdong 518057 (CN); YAO, Taiping, Shenzhen, Guangdong 518057 (CN); DING, Shouhong, Shenzhen, Guangdong 518057 (CN)
(74) Representative: AWA Sweden AB
(86) International application number: PCT/CN2025/106169
(87) International publication number: WO 2026/026446

(57) **Abstract**

The present application provides an image processing and model training method and apparatus, a device, a storage medium, and a program, which are applied to fields such as AI drawing and model training. The method comprises : obtaining a first biometric feature image and a prompt word (S201), the prompt word being used for indicating a preset living body attack type; extracting first image feature information of the first biometric feature image and text feature information of the prompt word (S202); determining second image feature information corresponding to the preset living body attack type (S203); and inputting the text feature information, the first image feature information, and the second image feature information into an image generation model and, on the basis of the first image feature information and by means of the image generation model, generating a first living body attack image conforming to the text feature information and the second image feature information (S204). That is, according to the present application, the first biometric feature image is processed by using the second image feature information and the prompt word as control conditions, thereby improving generation quality of the first living body attack image.

## Description

### RELATED APPLICATION

The present disclosure claims priority to Chinese Patent Application No. 2024110417895, filed with the China National Intellectual Property Administration on July 31, 2024 and entitled "IMAGE PROCESSING METHOD AND APPARATUS, MODEL TRAINING METHOD AND APPARATUS, DEVICE, AND STORAGE MEDIUM", which is incorporated herein by reference in its entirety.

### FIELD OF THE TECHNOLOGY

Embodiments of the present disclosure relate to the field of computer technologies, and in particular, to an image processing method and apparatus, a model training method and apparatus, a device, a storage medium, and a program.

### BACKGROUND OF THE DISCLOSURE

With the rapid development of artificial intelligence (Al) technologies, AI drawing applications emerge. AI drawing includes two application modes: text-to-image generation and image-to-image generation. Application scenarios of AI drawing are very wide. For example, a training image may be generated through AI drawing in a model training process. For example, in a training process of a liveness detection model, there are a large quantity of liveness attack types, and data collection and annotation with only manpower cannot meet an actual service requirement. Accordingly, training images corresponding to specified liveness attack types may be generated through AI drawing.

However, currently, when an image is generated based on another image, the generated image has unsatisfactory quality, and cannot meet an expected requirement.

### SUMMARY

The present disclosure provides an image processing method and apparatus, a model training method and apparatus, a device, a storage medium, and a program, to improve image generation quality.

According to a first aspect, the present disclosure provides an image processing method, including:
obtaining a first biometric feature image and a prompt word, the prompt word indicating a preset liveness attack type;
extracting first image feature information of the first biometric feature image and text feature information of the prompt word;
determining second image feature information corresponding to the preset liveness attack type; and
inputting the text feature information, the first image feature information, and the second image feature information to an image generation model, the image generation model being configured for generating, based on the first image feature information, a first liveness attack image conforming to the text feature information and the second image feature information.

According to a second aspect, the present disclosure provides a model training method, including:
obtaining a training image and a prompt word, the prompt word indicating a preset liveness attack type, and the training image being a biometric feature image or a liveness attack image;
extracting first image feature information of the training image and text feature information of the prompt word;
determining second image feature information corresponding to the preset liveness attack type;
inputting the text feature information of the prompt word, the first image feature information, and the second image feature information to an image generation model, the image generation model being configured for generating, based on the first image feature information, a third liveness attack image conforming to the text feature information and the second image feature information; and
determining a loss of the image generation model based on the third liveness attack image and the second image feature information, and training the image generation model based on the loss.

According to a third aspect, the present disclosure provides an image processing apparatus, including:
an obtaining unit, configured to obtain a first biometric feature image and a prompt word, the prompt word indicating a preset liveness attack type;
a feature extraction unit, configured to extract first image feature information of the first biometric feature image and text feature information of the prompt word;
a determining unit, configured to determine second image feature information corresponding to the preset liveness attack type;
a processing unit, configured to input the text feature information, the first image feature information, and the second image feature information to an image generation model, the image generation model being configured for generating, based on the first image feature information, a first liveness attack image conforming to the text feature information and the second image feature information.

In some embodiments, the determining unit is specifically configured to: determine N pieces of candidate image feature information corresponding to the preset liveness attack type, the N pieces of candidate image feature information being image feature information of N liveness attacks that belong to the preset liveness attack type, and N being a positive integer; and select one piece of candidate image feature information from the N pieces of candidate image feature information as the second image feature information.

In some embodiments, the N pieces of candidate image feature information or liveness attack feature information of a second liveness attack image is image texture feature information.

In some embodiments, the determining unit is specifically configured to: obtain the second liveness attack image based on the preset liveness attack type; and extract the liveness attack feature information of the second liveness attack image as the second image feature information.

In some embodiments, the image generation model includes a denoising network. The processing unit is specifically configured to: perform noise adding on the first image feature information of the first biometric feature image to obtain noise-added feature information of the first biometric feature image; denoise i^{th} denoised feature information of the first biometric feature image by using the denoising network based on the text feature information of the prompt word and the second image feature information, to obtain an i^{th} predicted noise value, i being a positive integer less than or equal to N, and the i^{th} denoised feature information being the noise-added feature information of the first biometric feature image if i is 1; obtain (i+1)^{th} denoised feature information of the first biometric feature image based on the i^{th} predicted noise value and the i^{th} denoised feature information of the first biometric feature image; use the (i+1)^{th} denoised feature information as new i^{th} denoised feature information, and repeatedly perform the above operations to obtain N^{th} denoised feature information of the first biometric feature image; determine the N^{th} denoised feature information as denoised image feature information; and decode the denoised image feature information to obtain the first liveness attack image.

In some embodiments, the processing unit is specifically configured to: use the i^{th} denoised feature information of the first biometric feature image as feature information inputted to the denoising network; and fuse feature information outputted from a first part of network layers of the denoising network at least with the text feature information of the prompt word, and fuse feature information outputted from a second part of network layers of the denoising network at least with the second image feature information, to obtain the i^{th} predicted noise value.

In some embodiments, the processing unit is specifically configured to: for a k^{th} network layer of the denoising network, fuse feature information outputted from the k^{th} network layer with at least one of the text feature information of the prompt word and the second image feature information, to obtain feature information inputted to a (k+1)^{th} network layer of the denoising network, k being a positive integer; and obtain the i^{th} predicted noise value based on the feature information inputted to the (k+1)^{th} network layer.

In some embodiments, the processing unit is specifically configured to input, to an attention module, the text feature information of the prompt word as a key value of the attention module, the second image feature information as a representative value of the attention module, and the feature information outputted from the k^{th} network layer as a query value of the attention module, and perform fusion to obtain the feature information inputted to the (k+1)^{th} network layer.

In some embodiments, the feature extraction unit is specifically configured to: preprocess the first biometric feature image to obtain a preprocessed first biometric feature image; and perform image feature extraction on the preprocessed first biometric feature image to obtain the first image feature information of the first biometric feature image.

In some embodiments, the feature extraction unit is specifically configured to: perform image matting on the first biometric feature image to extract an object region in the first biometric feature image; adjust a size of the object region to a first size; and center-crop the object region of the first size to a second size, to obtain a preprocessed first biometric feature image.

According to a fourth aspect, the present disclosure provides a model training apparatus, including:
an obtaining unit, configured to obtain a training image and a prompt word, the prompt word indicating a preset liveness attack type, and the training image being a biometric feature image or a liveness attack image;
a feature extraction unit, configured to extract first image feature information of the training image and text feature information of the prompt word;
a determining unit, configured to determine second image feature information corresponding to the preset liveness attack type;
a processing unit, configured to input the text feature information of the prompt word, the first image feature information, and the second image feature information to an image generation model, the image generation model being configured for generating, based on the first image feature information, a third liveness attack image conforming to the text feature information and the second image feature information; and
a training unit, configured to determine a loss of the image generation model based on the third liveness attack image and the second image feature information, and train the image generation model based on the loss.

In some embodiments, the determining unit is specifically configured to: determine N pieces of candidate image feature information corresponding to the preset liveness attack type, the N pieces of candidate image feature information being image feature information of N liveness attacks that belong to the preset liveness attack type, and N being a positive integer; and select one piece of candidate image feature information from the N pieces of candidate image feature information as the second image feature information.

In some embodiments, the determining unit is specifically configured to: extract, if the training image is a liveness attack image, liveness attack feature information of the training image as the second image feature information.

In some embodiments, the determining unit is specifically configured to obtain a fourth liveness attack image based on the preset liveness attack type, and extract liveness attack feature information of the fourth liveness attack image as the second image feature information.

In some embodiments, the training unit is specifically configured to: perform liveness attack feature extraction on the third liveness attack image to obtain liveness attack feature information of the third liveness attack image; and determine the loss of the image generation model based on the second image feature information and the liveness attack feature information of the third liveness attack image.

In some embodiments, if the second image feature information is texture feature information of the training image, the training unit is specifically configured to: perform texture feature extraction on the third liveness attack image to obtain texture feature information of the third liveness attack image; and determine the loss of the image generation model based on the texture feature information of the training image and the texture feature information of the third liveness attack image.

In some embodiments, the training unit is specifically configured to: determine a difference between the texture feature information of the training image and the texture feature information of the third liveness attack image; and determine the loss of the image generation model based on the difference.

In some embodiments, the feature extraction unit is specifically configured to: preprocess the training image to obtain a preprocessed training image; and perform image feature extraction on the preprocessed training image to obtain the first image feature information of the training image.

In some embodiments, the feature extraction unit is specifically configured to: perform image matting on the training image to extract an object region in the training image; adjust a size of the object region to a first size; and crop the object region of the first size randomly to a second size, to obtain a preprocessed training image.

According to a fifth aspect, the present disclosure provides an electronic device, including a processor and a memory. The memory is configured to store a computer program. The processor is configured to invoke and run the computer program stored in the memory, to perform the method according to the first aspect or the second aspect.

According to a sixth aspect, a chip is provided, and is configured to implement the method according to the implementations of the first aspect. Specifically, the chip includes a processor, configured to invoke a computer program from a memory and run the computer program, so that a device on which the chip is installed performs the method according to the first aspect or the second aspect.

According to a seventh aspect, a non-transitory computer-readable storage medium is provided, and is configured to store a computer program. The computer program enables a computer to perform the method according to the first aspect or the second aspect.

According to an eighth aspect, a computer program product is provided, and includes computer program instructions. The computer program instructions enable a computer to perform the method according to the first aspect or the second aspect.

According to a ninth aspect, a computer program is provided. When the computer program is run on a computer, the computer is enabled to perform the method according to the first aspect or the second aspect.

In conclusion, according to the present disclosure, the first biometric feature image and the prompt word are obtained, the prompt word indicating the preset liveness attack type. Image feature extraction is performed on the first biometric feature image to obtain the first image feature information of the first biometric feature image, and text feature extraction is performed on the prompt word to obtain the text feature information of the prompt word. In addition, the second image feature information corresponding to the preset liveness attack type is determined. Further, the text feature information, the first image feature information, and the second image feature information are inputted to the image generation model, to generate, by using the image generation model based on the first image feature information, the first liveness attack image conforming to the text feature information and the second image feature information. As can be seen, in the embodiments of the present disclosure, when the first liveness attack image is generated based on the first biometric feature image and the prompt word, the first biometric feature image is processed by using the second image feature information and the prompt word as a control condition, to generate the first liveness attack image, so that the generated first liveness attack image not only meets a requirement of the preset liveness attack type indicated by the prompt word, but also includes an image feature corresponding to the preset liveness attack type. Therefore, generation quality of the first liveness attack image is improved. When the image processing method is applied to generation of training data for a liveness detection model, a realistic high-quality liveness attack sample can be generated. When the liveness detection model is trained by using the realistic high-quality liveness attack sample, accuracy of the liveness detection model in recognizing realistic liveness attack data can be improved, thereby improving a detection effect of the liveness detection model.

### BRIEF DESCRIPTION OF THE DRAWINGS

FIG. 1 is a schematic diagram of an implementation environment of an image processing method according to an embodiment of the present disclosure.
FIG. 2 is a schematic flowchart of a model training method according to an embodiment of the present disclosure.
FIG. 3 is a schematic diagram of image-to-image generation.
FIG. 4 is a schematic diagram of extracting image feature information.
FIG. 5 is a schematic diagram of extracting text feature information.
FIG. 6 is a schematic diagram of an image processing process according to an embodiment of the present disclosure.
FIG. 7 is a schematic diagram of an image generation model.
FIG. 8 is a schematic diagram of denoising by using a denoising network.
FIG. 9 is a schematic diagram of a structure of a denoising network.
FIG. 10 is a schematic diagram of data processing between network layers of a denoising network.
FIG. 11, FIG. 12, and FIG. 13 are schematic diagrams of fusing feature information outputted from a network layer of a denoising network with text feature information of a prompt word and second image feature information.
FIG. 14A, FIG. 14B, and FIG. 14C are schematic diagrams of fusing feature information outputted from a k^{th} network layer of a denoising network with at least one of text feature information of a prompt word and second image feature information.
FIG. 15 is a specific schematic network diagram of a denoising network.
FIG. 16 is a schematic diagram of generating a third liveness attack image by using a decoder.
FIG. 17 is a schematic flowchart of an image processing method according to an embodiment of the present disclosure.
FIG. 18 is a schematic diagram of an image generation process.
FIG. 19 is a schematic flowchart of a training sample generation method according to an embodiment of the present disclosure.
FIG. 20 is a schematic diagram of a training sample generation process.
FIG. 21 is a schematic block diagram of an image processing apparatus according to an embodiment of the present disclosure.
FIG. 22 is a schematic block diagram of a model training apparatus according to an embodiment of the present disclosure.
FIG. 23 is a schematic block diagram of an electronic device according to an embodiment of the present disclosure.

### DESCRIPTION OF EMBODIMENTS

The following clearly and completely describes technical solutions in embodiments of the present disclosure with reference to the drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

The specification, claims, and drawings of the present disclosure, the terms "first", "second", and the like are intended to distinguish between similar objects but do not necessarily indicate a specific order or sequence. Data used in such a way is interchangeable in proper circumstances, so that the embodiments of the present disclosure described herein can be implemented in other orders than the order illustrated or described herein. In the embodiments of the present disclosure including the embodiments of both the claims and the specification (hereinafter referred to as "all embodiments of the present disclosure"), "B corresponding to A" indicates that B is associated with A. In an implementation, B may be determined based on A. However, determining B based on A does not mean determining B based only on A, and B may alternatively be determined based on A and/or other information. In addition, the terms "include" and "have" and any other variants thereof are intended to cover a non-exclusive inclusion. For example, a process, method, system, product, or device that includes a list of operations or units is not necessarily limited to those expressly listed operations or units, but may include other operations or units not expressly listed or inherent to such a process, method, product, or device. In addition, in the descriptions of the present disclosure, unless otherwise specified, "a plurality of" means two or more than two.

An image processing method provided in all embodiments of the present disclosure may be applied to various fields such as AI drawing and model training. When a first liveness attack image is generated based on a first biometric feature image, the first biometric feature image is processed by using a prompt word and second image feature information configured for representing an image feature of a target liveness attack as control information, to generate the first liveness attack image. In this way, the generated first liveness attack image not only meets a requirement of the prompt word, but also satisfies the image feature of the target liveness attack. Therefore, generation quality of the first liveness attack image is improved.

For ease of understanding of all embodiments of the present disclosure, related concepts used in all embodiments of the present disclosure are first described.

Image-to-image generation means transforming a feature of an object in an initial image based on an input prompt word, to generate a target image satisfying a requirement of the prompt word. Currently, an image-to-image generation method is usually generation by using an image generation model based on a diffusion algorithm, specifically transforming the initial image based on the prompt word inputted by the object (for example, a user).

Image processing in all embodiments of the present disclosure may be applied to any image-to-image generation scenario, that is, may be applied to a scenario in which an image is generated based on another image.

In all embodiments of the present disclosure, the image processing method may be used to generate a training sample, for example, generate a training sample for a liveness detection model. A liveness detection technology is applied to various fields such as an intelligent face recognition payment service and an identity authentication service. Because there are many liveness attack types, data collection and annotation with only manpower cannot meet an actual service requirement, and collected data may be homogeneous and singular, making it impossible to construct an effective negative sample (that is, a bad case). Consequently, the liveness detection model cannot be trained thoroughly, detection accuracy of the liveness detection model is reduced, and further, there is a risk such as infringement. Current liveness attack sample generation methods mainly include a conventional generative adversarial network (GAN)-based method and a diffusion model-based method.

A main idea of a GAN-based liveness attack sample generation technology is: randomly initializing a Gaussian noise RGB image, inputting the Gaussian noise image to an encoder part of a generator to obtain a corresponding encoded feature vector, further inputting the feature vector to a decoder part of the generator, and obtaining, through upsampling, an image whose size and dimension are the same as those of the original Gaussian noise RGB image, denoted as a third image; and then inputting the third image and a real liveness attack image (for example, an image of a three-dimensional (3D) mask, a head model, a printed photo, or a screen replay) to a binary classification network together to determine authenticity. The generator ensures that the third image is as similar as possible to the real liveness attack image. A discriminator adds a fake label to the generated image (that is, the third image), and adds a real label to the real liveness attack image. In such a continuous adversarial training manner, the generator can finally generate a result similar to the real liveness attack image for any input Gaussian noise image. However, the GAN-based liveness attack sample generation technology suffers from poor overall performance and low quality of the generated third image.

In a diffusion model-based liveness attack sample generation technology, a corresponding image is generated by using text information as a control condition. However, a liveness attack sample generated by using the diffusion model-based liveness attack sample generation technology is not realistic enough and has poor quality, and further cannot meet a training requirement, resulting in a poor model training effect.

In other words, a liveness attack image generated by using a current image generation technology (such as the GAN-based liveness attack sample generation technology and the diffusion model-based liveness attack sample generation technology) has poor quality, and cannot meet a requirement.

To resolve the foregoing technical problem, an embodiment of the present disclosure provides an image processing method. A first biometric feature image and a prompt word are obtained, the prompt word being configured for indicating a preset liveness attack type, and the first biometric feature image being a biometric feature image. Image feature extraction is performed on the first biometric feature image to obtain first image feature information of the first biometric feature image, and text feature extraction is performed on the prompt word to obtain text feature information of the prompt word. In addition, second image feature information corresponding to the preset liveness attack type is determined. Further, the text feature information of the prompt word and the second image feature information are used as a control condition, and the first image feature information of the first biometric feature image is processed by using the image generation model, to obtain a first liveness attack image. As can be seen, in all embodiments of the present disclosure, when the first liveness attack image is generated based on the first biometric feature image and the prompt word, the first biometric feature image is processed by using the second image feature information corresponding to the preset liveness attack type and the prompt word as the control condition, to generate the first liveness attack image, so that the generated first liveness attack image not only meets a requirement of the preset liveness attack type indicated by the prompt word, but also includes image feature information corresponding to the preset liveness attack type. Therefore, generation quality of the first liveness attack image is improved. When the image processing method is applied to generation of training data for a liveness detection model, a realistic high-quality liveness attack sample can be generated. When the liveness detection model is trained by using the realistic high-quality liveness attack sample, accuracy of the liveness detection model in recognizing realistic liveness attack data can be improved, thereby improving a detection effect of the liveness detection model.

The following describes an implementation environment of the image processing method provided in all embodiments of the present disclosure.

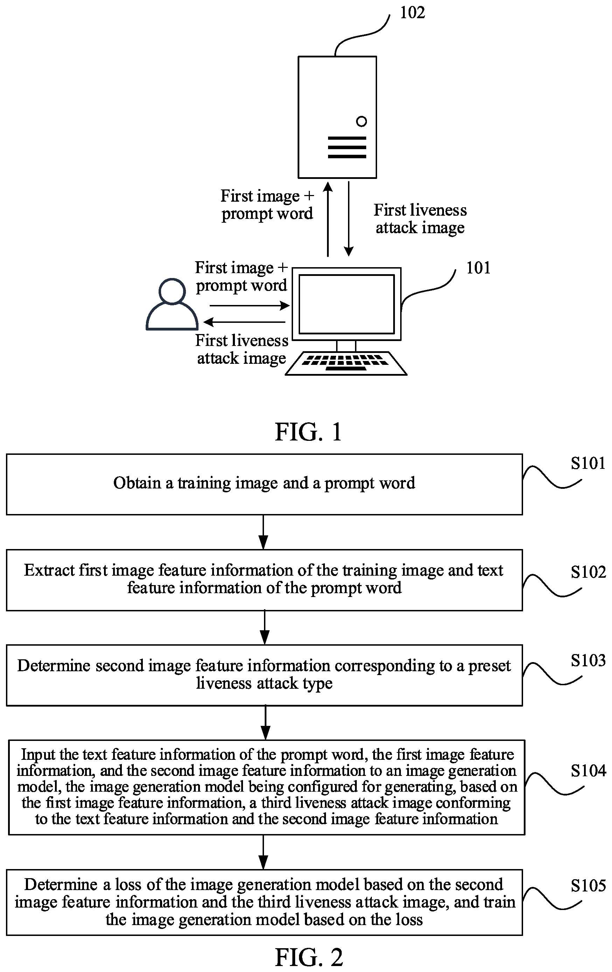

FIG. 1 is a schematic diagram of an implementation environment of an image processing method according to an embodiment of the present disclosure. As shown in FIG. 1, the implementation environment includes a terminal device 101 and a server 102.

The terminal device 101 is in wired or wireless connection to the server 102.

In all embodiments of the present disclosure, a client of an image processing system is installed on the terminal device 101, and the server 102 may be understood as a server or a backend of the image processing system. An object (for example, a user) may interact with the client of the image processing system installed on the terminal device 101. The server 102 stores an image generation model. For example, the image generation model may be a diffusion algorithm-based image generation model.

In all embodiments of the present disclosure, in this embodiment of the present disclosure, before an image is processed, the image generation model is trained first. A process in which the server 102 trains the image generation model is described herein. Specifically, the object may transmit a prompt word to the server 102 via the terminal device 101. The prompt word is configured for indicating control information used when a third liveness attack image is generated based on a training image, for example, is configured for indicating a preset liveness attack type. The server 102 obtains the training image from a database, or the terminal device 101 transmits the training image to the server 102. Then, the server 102 performs image feature extraction on the training image to obtain first image feature information of the training image, and performs text feature extraction on the prompt word to obtain text feature information of the prompt word. In addition, the server 102 determines second image feature information corresponding to the preset liveness attack type. Further, the server 102 uses the text feature information of the prompt word and the second image feature information as a control condition, and processes the first image feature information of the training image by using the image generation model, to obtain the third liveness attack image; and determines a

loss of the image generation model based on the third liveness attack image and the second image feature information, and trains the image generation model based on the loss. For example, the server 102 determines a difference between the second image feature information corresponding to the preset liveness attack type and liveness attack feature information of the third liveness attack image, and determines the loss of the image generation model based on the difference.

In all embodiments of the present disclosure, the image generation model may alternatively be trained by the terminal device 101. This is not limited in the embodiments of the present disclosure.

In all embodiments of the present disclosure, after training is completed for the image generation model, the image processing method in the embodiments of the present disclosure is performed by using the trained image generation model.

In all embodiments of the present disclosure, the image processing method provided in the embodiments of the present disclosure is performed by a system including the terminal device 101 and the server 102. For example, the object (for example, the user) starts the client of the image processing system on the terminal device 101. The client displays an input interface for a first biometric feature image and an input box for a prompt word. The object inputs the to-be-processed first biometric feature image in the input interface, and inputs the prompt word in the input box for the prompt word. The prompt word is configured for indicating a preset liveness attack type. The first biometric feature image is a biometric feature image. The terminal device 101 transmits the first biometric feature image and the prompt word to the server 102. The server 102 extracts first image feature information of the first biometric feature image and text feature information of the prompt word. Meanwhile, the server 102 determines second image feature information corresponding to the preset liveness attack type. Then, the server 102 uses the text feature information of the prompt word and the second image feature information as a control condition, and processes the first image feature information of the first biometric feature image by using the image generation model, to obtain a first liveness attack image. For example, the server 102 includes the image generation model. The server 102 inputs the first image feature information of the first biometric feature image, the text feature information of the prompt word, and the second image feature information to the image generation model, and processes the first image feature information of the first biometric feature image by using the text feature information of the prompt word and the second image feature information as control information, to generate the first liveness attack image. Finally, the server 102 transmits the generated first liveness attack image to the terminal device 101, and the terminal device 101 displays the first liveness attack image to the object. As can be seen, in all embodiments of the present disclosure, when the first liveness attack image is generated based on the first biometric feature image and the prompt word, the first biometric feature image is processed by using the second image feature information and the prompt word as the control condition, to generate the first liveness attack image, so that the generated first liveness attack image not only meets a requirement of the preset liveness attack type indicated by the prompt word, but also includes image feature information corresponding to the preset liveness attack type. Therefore, generation quality of the first liveness attack image is improved. When the image processing method is applied to generation of training data for a liveness detection model, a realistic high-quality liveness attack sample can be generated. When the liveness detection model is trained by using the realistic high-quality liveness attack sample, accuracy of the liveness detection model in recognizing realistic liveness attack data can be improved, thereby improving a detection effect of the liveness detection model.

In all embodiments of the present disclosure, the image processing method provided in the embodiments of the present disclosure is performed by the terminal device 101. In this case, the terminal device 101 may be any terminal device that can provide an image processing service. The server 102 may be any server that can provide a data downloading service. In an example, the server 102 stores the image generation model. The client of the image processing system is installed on the terminal device 101. The client may request the image generation model from the server 102 based on a request of the object. For example, the terminal device 101 displays an input interface for a first biometric feature image and an input box for a prompt word. The object inputs the to-be-processed first biometric feature image in the input interface, and inputs the prompt word in the input box for the prompt word. The terminal device 101 transmits a request to the server 102 in response to an input operation for the first biometric feature image and/or the prompt word, to request the image generation model. The terminal device 101 performs image feature extraction on the first biometric feature image to obtain first image feature information of the first biometric feature image, and performs text feature extraction on the prompt word to obtain text feature information of the prompt word. Meanwhile, the terminal device 101 determines second image feature information corresponding to a preset liveness attack type is determined. Further, the terminal device 101 uses the text feature information of the prompt word and the second image feature information as a control condition, and processes the first image feature information of the first biometric feature image by using the image generation model, to generate a first liveness attack image. The generated first liveness attack image not only meets a requirement of the preset liveness attack type indicated by the prompt word, but also includes an image feature of a target liveness attack of the preset liveness attack type.

In all embodiments of the present disclosure, the terminal device 101 includes but is not limited to a desktop computer, a notebook computer, a smartphone, a tablet computer, an Internet of things device, a portable wearable device, and the like. The Internet of things device may be a smart speaker, a smart television, a smart air conditioner, a smart in-vehicle device, or the like. The portable wearable device may be a smartwatch, a smart band, a head mounted device, or the like. The terminal device is generally equipped with a display apparatus. The display apparatus may alternatively be a display, a display screen, a touchscreen, or the like. The touchscreen may alternatively be a touch control screen, a touch panel, or the like.

In all embodiments of the present disclosure, there may be one or more servers 102. When there are a plurality of servers 102, at least two servers are configured to provide different services, and/or, at least two servers are configured to provide a same service, for example, provide the same service in a load balancing manner. This is not limited in the embodiments of the present disclosure. The server 102 may be an independent physical server, a server cluster or distributed system including a plurality of physical servers, or a cloud server providing a basic cloud computing service such as a cloud service, a cloud database, cloud computing, a cloud function, cloud storage, a network service, cloud communication, a middleware service, a domain name service, a security service, a content delivery network (CDN), and a big data and artificial intelligence platform. The server 102 may also become a node of a blockchain.

The implementation environment of this embodiment of the present disclosure includes but is not limited to that shown in FIG. 1.

The following describes the technical solutions of the embodiments of the present disclosure in detail by using some embodiments. The following several embodiments may be combined with each other, and a same or similar concept or process may be omitted in some embodiments.

First, a training process of an image generation model in all embodiments of the present disclosure is described with reference to FIG. 2.

FIG. 2 is a schematic flowchart of a model training method according to an embodiment of the present disclosure. An execution body of this embodiment of the present disclosure may be an apparatus having a model training function, for example, a model training apparatus. The model training apparatus may be the server 102 or the terminal device 101 shown in FIG. 1, or may be a system including the server 102 or the terminal device 101 shown in FIG. 1. For ease of description, the method in this embodiment of the present disclosure is described in the following embodiments by using an example in which the execution body is an electronic device.

As shown in FIG. 2, the model training method in this embodiment of the present disclosure includes the following operations.

S101: The electronic device obtains a training image and a prompt word. It can be understood that a plurality of training images may be applied in training the image generation model. The quantity of training images may be hundreds, thousands or more.

The prompt word indicates a preset liveness attack type. The training image is a biometric feature image or a liveness attack image.

Data used in all embodiments of the present disclosure and a process of obtaining the data comply with relevant laws and regulations.

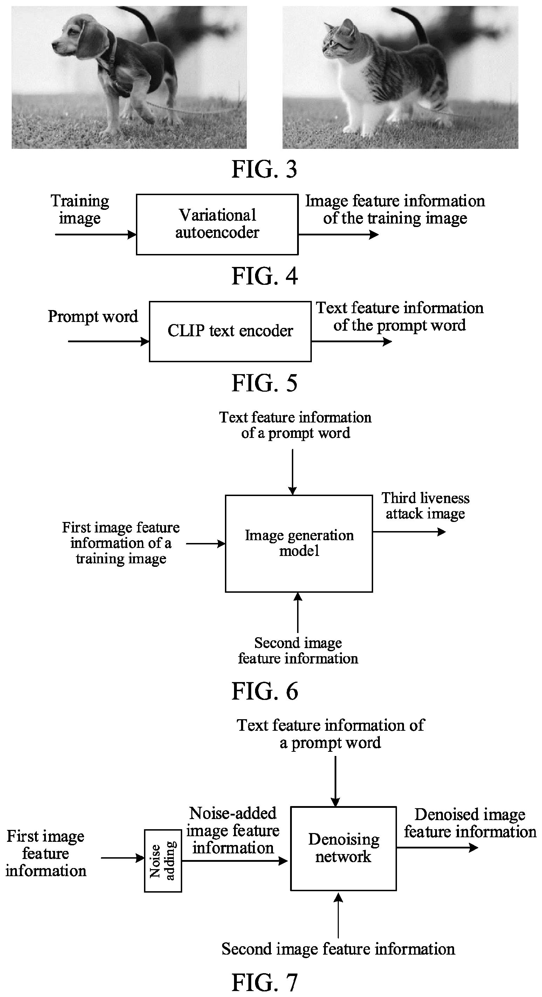

In the field of image generation, a requirement on image generation may be described by using a prompt word. For example, as shown in FIG. 3, the prompt word is configured for indicating to generate a kitten. In this way, in the field of image generation, a kitten shown on the right in FIG. 3 may be generated from a puppy in a left image in FIG. 3 based on the prompt word.

The image generation model in all embodiments of the present disclosure may be used in different fields, to generate images meeting different requirements.

In an example, the image generation model in all embodiment of the present disclosure may be used in the field of AI drawing, to generate an image meeting a requirement.

In an example, the image generation model in all embodiments of the present disclosure may be used in the field of training sample generation, to generate a training sample meeting a requirement. For example, the image generation model may be configured for generating training data for a liveness detection model, for example, configured for generating a realistic high-quality liveness attack sample.

In all embodiments of the present disclosure, when the image generation model is used in different fields, the image generation model may be trained by using training images corresponding to the fields.

In all embodiments of the present disclosure, when the image generation model is used in the field of liveness attack detection, the image generation model may be trained by using a biometric feature image or a liveness attack image as a training image. The biometric feature image is a biometric feature image of a real living body. The liveness attack image is a non-real biometric feature image, such as a mask image or a replay image.

A liveness attack is a behavior of deceiving a face recognition system by forging or simulating a liveness feature (for example, a face) by using a technical means, to achieve an illegal purpose. The liveness attack includes different types based on different attack manners. In all embodiments of the present disclosure, a liveness attack type may be understood as a liveness attack manner.

In all embodiments of the present disclosure, the liveness attack type in all embodiments of the present disclosure may include a 3D mask, a printed photo, a screen replay, a 3D head model, and another attack type.

The 3D mask liveness attack type is an attack manner in which an attacker deceives the face recognition system by using a 3D mask. Specifically, the attacker constructs a highly realistic 3D mask. The mask is usually made of a material such as silica gel and plastic, and highly restores a facial feature of the impersonated. By placing the 3D mask in front of a camera, the attacker can bypass liveness detection of the face recognition system, to impersonate another person.

The printed photo liveness attack type means attacking by printing a photo of the impersonated. Specifically, the attacker prints the photo of the impersonated, and then uses the printed photo to perform liveness detection, to bypass verification performed by the face recognition system.

The screen replay liveness attack type is a method of performing an artifact attack by shooting a face image played on a screen of the electronic device. Specifically, the attacker shoots the face image displayed on the screen, and then uses the image in a liveness detection system, thereby bypassing a liveness detection mechanism of the system.

The 3D head model liveness attack type simulates a real face by using a highly realistic 3D head model, thereby bypassing liveness detection of the face recognition system. In this attack manner, a 3D printing technology and a high-precision silica gel model are used, so that the head model is very close to the real face in terms of appearance and texture, thereby deceiving the face recognition system.

To achieve accuracy of training the image generation model, the prompt word is further obtained. The prompt word indicates the preset liveness attack type.

The liveness attack type in all embodiments of the present disclosure mainly includes a 3D mask, a printed photo, a screen replay, a 3D head model, and another attack type. Different liveness attack types may have different liveness attack features. In all embodiments of the present disclosure, the prompt word may be used to indicate the preset liveness attack type, for example, indicate that the preset liveness attack type is a 3D mask or a screen replay.

In all embodiments of the present disclosure, the electronic device may process the training image based on the preset liveness attack type indicated by the prompt word, to generate a liveness attack image corresponding to the preset liveness attack type. For example, when the preset liveness attack type indicated by the prompt word is a 3D mask, the electronic device processes the training image to generate a 3D mask image, the 3D mask image being a liveness attack image.

A specific manner in which the electronic device obtains the training image and the prompt word is not limited in all embodiments of the present disclosure.

In all embodiments of the present disclosure, the prompt word is inputted by an object (for example, a user). All or a part of training images are training data in a database. For example, when the electronic device is a terminal device, the object inputs the prompt word on the terminal device. For another example, when the electronic device is a server, the object inputs the prompt word on a terminal device, and the terminal device transmits, to the server, the prompt word inputted by the object.

In all embodiments of the present disclosure, the prompt word is inputted by an object, and all or a part of training images are also inputted by the object. For example, when the electronic device is a terminal device, the object inputs the training image and the prompt word on the terminal device. For another example, when the electronic device is a server, the object inputs the training image and the prompt word on a terminal device, and the terminal device transmits, to the server, the training image and the prompt word inputted by the object. In all embodiments of the present disclosure, the training image may be an image shot by the object, or an image obtained by the object in another manner.

In all embodiments of the present disclosure, all or a part of training images are generated by the electronic device, and the prompt word is inputted by an object. For example, when the electronic device is a terminal device, the terminal device receives an image generation instruction inputted by the object, the image generation instruction being configured for instructing to generate a training image meeting a preset requirement; and the terminal device generates the training image according to the image generation instruction. For another example, when the electronic device is a server, a terminal device receives an image generation instruction inputted by the object, and transmits the image generation instruction to the server; and the server generates the training image according to the image generation instruction.

After obtaining the prompt word and a training data set including the training image according to the foregoing method, the electronic device trains the image generation model by using the training data set and the prompt word.

In all embodiments of the present disclosure, a process in which the electronic device trains the image generation model by using each training image in the training data set is basically consistent. For ease of description, one training image is used as an example for description. In all embodiments of the present disclosure, the image generation model is trained in a plurality of rounds, and in each round of training, a batch of training images are selected from the training data set for training. In all embodiments of the present disclosure, the training image may be understood as one training image in training data for any round. In all embodiments of the present disclosure, in a process of training the image generation model in a plurality of rounds, each round of training may correspond to a different prompt word, for example, a different prompt word is inputted during each round of training, or each piece of training data corresponds to one prompt word. In all embodiments of the present disclosure, a same prompt word may be inputted during each round of training. The input of the prompt word is not limited in all embodiments of the present disclosure, and may be set based on an actual requirement.

S102: The electronic device extracts first image feature information of the training image and text feature information of the prompt word.

In all embodiments of the present disclosure, after the electronic device obtains the training image and the prompt word corresponding to the training image according to the foregoing operations, to implement fusion between image information of the training image and semantic information of the prompt word, the electronic device first extracts the first image feature information of the training image and the text feature information of the prompt word.

In all embodiments of the present disclosure, before extracting the first image feature information of the training image, the electronic device first preprocesses the training image to obtain a preprocessed training image.

A specific manner of preprocessing the training image is not limited in all embodiments of the present disclosure. For example, definition and sharpness of the training image are processed.

In an example, the electronic device crops, based on an input image size of the image generation model, the training image to be consistent with the input image size of the image generation model.

In some examples, the electronic device performs image matting on the training image to extract an object region in the training image, and then adjusts a size of the object region to a first size. Then, the electronic device crops the object region of the first size randomly to a second size, to obtain the preprocessed training image. The second size is the input image size required by the image generation model.

For example, it is assumed that the input image size required by the image generation model is 224*224*3. To achieve this objective, all training images need to be resized to this scale. In addition, the prompt word in all embodiments of the present disclosure is configured for indicating the preset liveness attack type. Based on this, the electronic device performs image matting on the object region in the training image. For example, if the training image includes a face, face detection may be performed on a face region in the training image by using a face detection tool, and then the face region is extracted from the training image based on a detection result. Next, the extracted face region is resized to the first size, for example, resized to 256*256*3. Finally, the electronic device obtains an input image of the second size (for example, 224*224*3) by using a random cropping method.

In all embodiments of the present disclosure, latent space feature extraction may be performed on the training image by using an image feature encoder. A main objective of this part is to represent an image feature by using a high-level semantic feature. This can not only reduce a dimensionality of original image space to improve a training speed, but also facilitate better interaction with a subsequent condition feature (that is, control information).

In some examples, the image feature encoder may be any trained model.

In an example, end-to-end training may be performed on the image feature encoder together with the image generation model.

A specific network structure of the image feature encoder is not limited in all embodiments of the present disclosure.

In all embodiments of the present disclosure, the image feature encoder includes one or more convolutional layers. The electronic device directly performs feature extraction on the training image by using the image feature encoder, to obtain the first image feature information of the training image.

In all embodiments of the present disclosure, to improve an image processing speed and reduce a calculation workload, the electronic device may perform encoding compression on the training image to obtain the first image feature information of the training image. In this case, the image feature encoder may be a feature extractor having an encoding compression function. For example, the image feature encoder is a variational autoencoder (VAE for short) encoder or an image feature codec of a constractive language-image pre-training (CLIP) model. Then, the electronic device may perform encoding compression on the training image by using the VAE encoder or the image feature codec of the CLIP model, to obtain the first image feature information of the training image.

For example, as shown in FIG. 4, the electronic device performs encoding compression on the training image by using a VAE, to obtain the first image feature information of the training image. Specifically, the VAE encoder encodes the training image to transform the training image from pixel space to latent space, to obtain the first image feature information of the training image.

For example, the training image is a photo image of 512*512 pixels, with a data representation of (3, 512, 512), that is, an image data scale is three RGB channels*512*512 pixels, and a data size is 786432. The training image is transformed to the latent space through VAE encoding, and is compressed, for example, into image feature information of (4, 64, 64) in the latent space, with a data size of 16384, which is reduced to 1/64 of the original data size. In this way, processing efficiency and universality of an image processing method provided in all embodiments of the present disclosure can be greatly improved.

A specific manner in which the electronic device extracts the text feature information of the prompt word is not limited in all embodiments of the present disclosure.

In all embodiments of the present disclosure, the electronic device performs text feature extraction on the prompt word by using a text encoder, to obtain the text feature information of the prompt word. For example, the text encoder includes an embedding layer.

In all embodiments of the present disclosure, as shown in FIG. 5, the electronic device performs feature extraction on the prompt word by using a CLIP text encoder, to obtain the text feature information of the prompt word. The CLIP text encoder converts text information of the prompt word into information represented by numbers, so that a machine can understand semantics of a text of the prompt word. For example, the CLIP text encoder may be understood as a special transformer language model whose input is a text and whose output is a matrix represented by numbers. Specifically, the prompt word is divided into a plurality of tokens (tokens or characters), and an embedding vector of each token is extracted. In this way, the embedding vectors of the plurality of tokens are combined to form an embedding matrix. The embedding matrix is used as the text feature information of the prompt word.

In addition to extracting the first image feature information of the training image and the text feature information of the prompt word by using the foregoing method, the electronic device may also obtain the first image feature information of the training image and the text feature information of the prompt word in another manner. This is not limited in all embodiment of the present disclosure.

After extracting the first image feature information of the training image and the text feature information of the prompt word, the electronic device performs the following operation S104.

S103: The electronic device determines second image feature information corresponding to the preset liveness attack type.

There is no specific execution sequence between S102 and S103. In other words, S102 may be performed before S103, may be performed after S103, or may be performed synchronously with S103.

This embodiment of the present disclosure focuses on how to train an image generation model that generates an image in a more refined manner. As can be seen from the foregoing, an image generated by the image generation model guided only by using a text (that is, the prompt word) as a condition cannot achieve an expected effect. In all embodiments of the present disclosure, when the image generation model is trained by using the training image, to improve generation accuracy of a liveness attack image, in addition to obtaining the prompt word, the second image feature information corresponding to the preset liveness attack type is further determined. The second image feature information may be understood as main image difference information between an image corresponding to the preset liveness attack type and an image of a real living body. For example, for the 3D mask attack type, because there is a great material difference between mask texture and real human texture, texture is an image feature that meets a liveness detection requirement, and further, texture feature information is determined as image feature information corresponding to the 3D mask attack type. Therefore, in all embodiments of the present disclosure, when the image generation model is trained by using the second image feature information as an auxiliary condition, a trained image generation model can generate an image that conforms to the second image feature information corresponding to the preset liveness attack type.

A specific manner of determining the second image feature information corresponding to the preset liveness attack type in all embodiments of the present disclosure includes but is not limited to the following several manners.

Manner 1: Determine N pieces of candidate image feature information corresponding to the preset liveness attack type, and select one piece of candidate image feature information from the N pieces of candidate image feature information as the second image feature information, N being a positive integer, and the N pieces of candidate image feature information being image feature information of N liveness attacks that belong to the preset liveness attack type.

The liveness attack type in all embodiments of the present disclosure includes a 3D mask, a printed photo, a screen replay, a 3D head model, and another attack type. In all embodiments of the present disclosure, different liveness attack types may have image feature information of different liveness attacks.

For example, a 3D mask and a 3D head model have significant differences from a real living body in material, and different materials have different texture features. Therefore, image feature information of a 3D mask liveness attack and a 3D head model liveness attack may include texture image feature information and the like.

For another example, compared with a real living body, a printed photo and a screen replay may have a shadow, an image edge, and the like. Therefore, image feature information of a printed photo liveness attack and a screen replay liveness attack may include image feature information such as a shadow and an image edge.

In Manner 1, the electronic device determines, in the foregoing manner, the N pieces of candidate image feature information corresponding to the preset liveness attack type. The electronic device selects one piece of candidate image feature information from the N pieces of candidate image feature information as the second image feature information. For example, the electronic device determines a default piece of candidate image feature information as the second image feature information. For another example, the electronic device displays the N pieces of candidate image feature information to the object, and the object selects one piece of candidate image feature information from the N pieces of candidate image feature information as the second image feature information.

For example, if the liveness attack type is a 3D mask, and different materials, for example, N different materials, may be used for the 3D mask, the electronic device determines image feature information corresponding to the N different materials as N pieces of candidate image feature information corresponding to the 3D mask. In an example, the electronic device displays the image feature information corresponding to the N different materials to the object, and the object selects image feature information corresponding to a silica gel material in the N different materials. The electronic device uses, based on a selection operation performed by the object on the image feature information corresponding to the silica gel material, the image feature information corresponding to the silica gel material as the second image feature information. In another example, the electronic device displays the N different materials to the object, and the object selects a silica gel material from the N different materials, and uses the silica gel material as a selected reference feature. The electronic device extracts, based on a selection operation performed by the object on the silica gel material, image feature information corresponding to the silica gel material as the second image feature information. In all embodiments of the present disclosure, the image feature information corresponding to the material may be image texture feature information of the material.

Manner 2: Extract, if the training image is a liveness attack image, liveness attack feature information of the training image as the second image feature information.

In Manner 2, if the training image is a liveness attack image, the training image is a liveness attack image corresponding to the preset liveness attack type, and the electronic device may directly determine the liveness attack feature information of the training image as the second image feature information.

For example, when the training image is a screen replay, the electronic device extracts edge feature information of the training image as the second image feature information.

For example, when the training image is a 3D mask or a 3D head model, the electronic device extracts texture feature information of the training image as the second image feature information.

A specific manner in which the electronic device extracts the texture feature information of the training image is not limited in all embodiments of the present disclosure. For example, the texture feature information of the training image is extracted by using a gray-level co-occurrence matrix, a Tamura texture feature, an autoregressive texture model, or wavelet transform.

In Manner 2, the liveness attack image is used as the training image, and the liveness attack feature information of the training image is extracted as the second image feature information, so that accurate image information corresponding to the preset liveness attack type can be obtained, improving model training accuracy and reducing difficulty in obtaining the second image feature information.

Manner 3: Obtain a fourth liveness attack image based on the preset liveness attack type, and extract liveness attack feature information of the fourth liveness attack image as the second image feature information.

In Manner 3, when the image generation model is trained by using the training image, the fourth liveness attack image is further used. The fourth liveness attack image may be a liveness attack image that is inputted by the object and that corresponds to the preset liveness attack type, or may be a liveness attack image that is downloaded by the electronic device from a network and that corresponds to the preset liveness attack type. A specific manner of obtaining the fourth liveness attack image is not limited in all embodiments of the present disclosure. The electronic device may extract the liveness attack feature information of the fourth liveness attack image as the second image feature information. If the foregoing training image is a liveness attack image, a liveness attack type of the fourth liveness attack image may be the same as or different from a liveness attack type of the training image. This is not limited in all embodiments of the present disclosure. For a specific manner of extracting the liveness attack feature information of the fourth liveness attack image, refer to the related manner of extracting the liveness attack feature information of the training image in Manner 2. Details are not described in all embodiments of the present disclosure again.

In Manner 3, the liveness attack feature information of the fourth liveness attack image is used as the second image feature information, so that accurate image information that corresponds to the preset liveness attack type can be obtained, improving model training accuracy, reducing difficulty in obtaining the second image feature information, enriching types of image information of a liveness attack, and further improving a generalization capability of the model.

In all embodiments of the present disclosure, the N pieces of candidate image feature information, the liveness attack feature information of the training image, or the liveness attack feature information of the fourth liveness attack image is image texture feature information.

S104: The electronic device inputs the text feature information of the prompt word, the first image feature information, and the second image feature information to an image generation model, the image generation model being configured for generating, based on the first image feature information, a third liveness attack image conforming to the text feature information and the second image feature information.

In all embodiments of the present disclosure, to ensure that an image generated by the image generation model not only meets a requirement of the preset liveness attack type indicated by the prompt word, but also has an image detail feature corresponding to the preset liveness attack type, when the image generation model is trained, first, the first image feature information of the training image is extracted, the text feature information of the prompt word is extracted, and the second image feature information corresponding to the preset liveness attack type is determined. As shown in FIG. 6, the first image feature information of the training image, the text feature information of the prompt word, and the second image feature information are further inputted to the image generation model, so that the image generation model processes the first image feature information of the training image by using the text feature information of the prompt word and the second image feature information as a control condition, to generate the third liveness attack image. The second image feature information and the text feature information of the prompt word are considered when the third liveness attack image is generated, so that the generated third liveness attack image not only meets the requirement of the preset liveness attack type indicated by the prompt word, but also includes the second image feature information corresponding to the preset liveness attack type. Therefore, an effect of generating the third liveness attack image by using the model is improved.

A specific network structure of the image generation model is not limited in all embodiments of the present disclosure.

In all embodiments of the present disclosure, as shown in FIG. 7, the image generation model includes a denoising network. In this case, S104 includes the following operations S104-A to S104-C.

S104-A: The electronic device performs noise adding on the first image feature information of the training image to obtain noise-added feature information of the training image.

S 104-B: The electronic device denoises the noise-added feature information of the training image by using the denoising network based on the text feature information of the prompt word and the second image feature information, to obtain denoised image feature information.

S104-C: The electronic device decodes the denoised image feature information to obtain the third liveness attack image.

In this implementation, the third liveness attack image is generated by using a forward diffusion technology and a reverse diffusion technology. In a forward diffusion process, noise is added to an image to gradually convert the image into a featureless noisy image. For example, in the forward process, any cat or dog image is converted into a noisy image, and the noisy image is an image in which a dog or a cat cannot be distinguished. Reverse diffusion is gradually estimating noise, and gradually subtracting the estimated noise from a noisy image to finally obtain a cat or dog image.

In all embodiments of the present disclosure, after obtaining the first image feature information of the training image, the second image feature information, and the text feature information of the prompt word according to the foregoing operations, the electronic device performs noise adding on the first image feature information of the training image, for example, adds a preset noise value to the first image feature information of the training image, to obtain the noise-added feature information of the training image. For example, Gaussian noise may be gradually added to the first image feature information of the training image, to obtain the noise-added feature information of the training image. This process may be understood as a forward diffusion process.

Then, the electronic device denoises the noise-added feature information of the training image based on the second image feature information and the text feature information of the prompt word, to obtain the denoised image feature information. This process may be understood as a reverse diffusion process.

A specific process in which the electronic device denoises the noise-added feature information of the training image based on the second image feature information and the text feature information of the prompt word, to obtain the denoised image feature information is not limited in all embodiments of the present disclosure.

In all embodiments of the present disclosure, the electronic device denoises the noise-added feature information of the training image for a plurality of times by using a mathematical method and by using the text feature information of the prompt word and the second image feature information as a control condition, to obtain the denoised image feature information.

In all embodiments of the present disclosure, the electronic device denoises the noise-added feature information of the training image for a plurality of times by using the denoising network and by using the text feature information of the prompt word and the second image feature information as a control condition. The denoising network is configured for predicting a noise value during each denoising process. Specifically, during each denoising process, the noise value currently predicted by the denoising network is subtracted from previous denoised feature information, to generate new denoised feature information, and the new denoised feature information is inputted to the denoising network for denoising again. The operations are repeated for a plurality of times, until noise added to the training image is removed. In the denoising process, in addition to the new denoised feature information of the training image and the text feature information of the prompt word, the second image feature information is also inputted to the denoising network. In the denoising process, image feature information is brought close to the text feature information of the prompt word and the second image feature information, so that the image feature information obtained finally through denoising fuses the text feature information of the prompt word and the second image feature information. In this way, the third liveness attack image generated based on the image feature information obtained through denoising not only meets the requirement of the preset liveness attack type indicated by the prompt word, but also includes the second image feature information corresponding to the preset liveness attack type. Therefore, an image generation effect of the image generation model is improved.

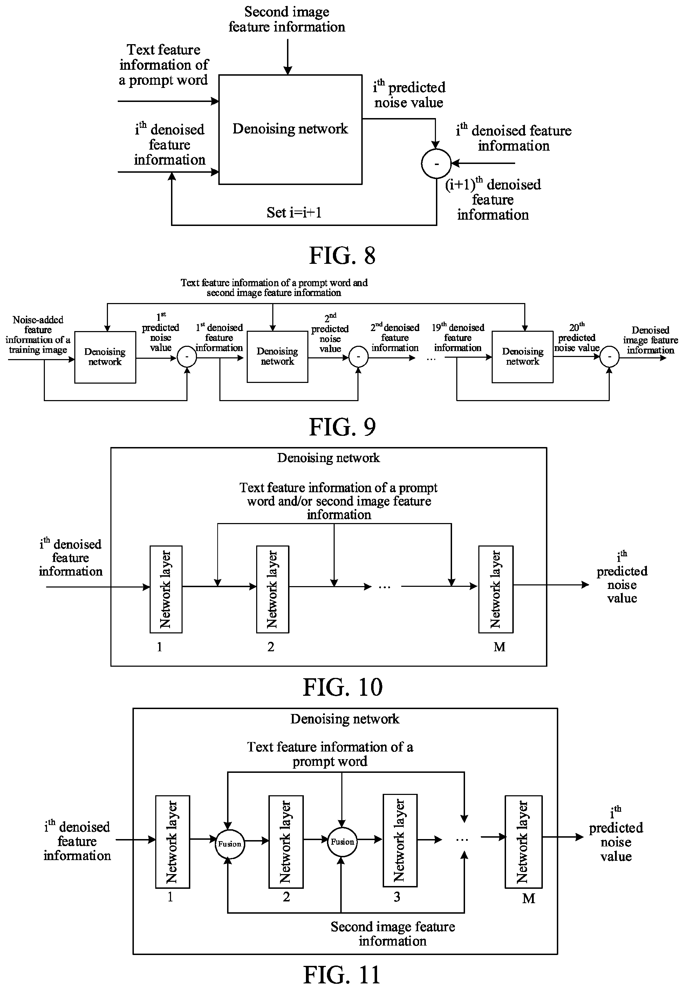

As shown in FIG. 8, the denoising process performed by using the denoising network is an iterative process. For example, i^{th} denoised feature information of the training image is denoised by using the denoising network and by using at least one of the text feature information of the prompt word and the second image feature information as a control condition, to obtain i^{th} predicted noise value. Then, (i+1)^{th} denoised feature information of the training image is obtained based on the i^{th} predicted noise value and the i^{th} denoised feature information of the training image. Next, the (i+1)^{th} denoised feature information is used as new i^{th} denoised feature information, and the new i^{th} denoised feature information is denoised by using the denoising network and by using at least one of the text feature information of the prompt word and the second image feature information as a control condition, to obtain an i^{th} predicted noise value, and (i+1)^{th} denoised feature information of the training image is obtained based on the i^{th} predicted noise value and the i^{th} denoised feature information of the training image. Then, the (i+1)^{th} denoised feature information is used as new i^{th} denoised feature information, and the above operations are performed. After the denoising operations are repeated for N times, N^{th} denoised feature information may be obtained. The N^{th} denoised feature information is determined as the denoised image feature information. In the N denoising processes, the text feature information of the prompt word is used as a control condition in at least one denoising process, and the second image feature information is used as a control condition in at least one denoising process. In other words, in the N denoising processes, the text feature information of the prompt word and the second image feature information are entirely used as the control condition. However, in a specific denoising process, the text feature information of the prompt word may be used as a control condition, the second image feature information may be used as a control condition, or the text feature information of the prompt word and the second image feature information may be used as a control condition.

In all embodiments of the present disclosure, the text feature information of the prompt word and the second image feature information are used as a control condition in each denoising process. In this case, S104-B includes the following operations S104-B1 to S104-B3.

S104-B1: The electronic device denoises the i^{th} denoised feature information of the training image by using the denoising network based on the text feature information of the prompt word and the second image feature information, to obtain the i^{th} predicted noise value, i being a positive integer less than or equal to N, and the i^{th} denoised feature information being the noise-added feature information of the training image if i is 1.

S104-B2: The electronic device obtains the (i+1)^{th} denoised feature information of the training image based on the i^{th} predicted noise value and the i^{th} denoised feature information of the training image.

S104-B3: The electronic device uses the (i+1)^{th} denoised feature information as new i^{th} denoised feature information, and repeatedly performs the above operations to obtain the N^{th} denoised feature information of the training image.

S104-B4: The electronic device determines the N^{th} denoised feature information as the denoised image feature information.

For example, it is assumed that N is equal to 20. As shown in FIG. 9, first, the electronic device inputs the noise-added feature information of the training image, the text feature information of the prompt word, and the second image feature information to the denoising network for denoising, to obtain 1^{st} predicted noise value preset by the denoising network, and obtains 1^{st} denoised feature information of the training image based on the 1^{st} predicted noise value and the noise-added feature information of the training image. Then, the electronic device inputs the 1^{st} denoised feature information of the training image, the text feature information of the prompt word, and the second image feature information to the denoising network for denoising, to obtain a 2^{nd} predicted noise value preset by the denoising network, and obtains 2^{nd} denoised feature information based on the 2^{nd} predicted noise value and the 1^{st} denoised feature information. Then, the electronic device inputs the 2^{nd} denoised feature information of the training image, the text feature information of the prompt word, and the second image feature information to the denoising network for denoising, to obtain a 3^{rd} predicted noise value preset by the denoising network, and obtains 3^{rd} denoised feature information based on the 3^{rd} predicted noise value and the 2^{nd} denoised feature information. The electronic device repeatedly performs the operations, that is, inputs 19^{th} denoised feature information of the training image, the text feature information of the prompt word, and the second image feature information to the denoising network for denoising, to obtain 20^{th} predicted noise value preset by the denoising network, and obtains 20^{th} denoised feature information based on the 20^{th} predicted noise value and the 19^{th} denoised feature information. Further, the electronic device determines the 20^{th} denoised feature information as the denoised image feature information.

The following describes a specific process of denoising the i^{th} denoised feature information of the training image by using the denoising network and by using the text feature information of the prompt word and the second image feature information as the control condition, to obtain the i^{th} predicted noise value in S104-B1.

A specific manner in which the electronic device denoises the i^{th} denoised feature information of the training image by using the denoising network and by using the text feature information of the prompt word and the second image feature information as the control condition, to obtain the i^{th} predicted noise value is not limited in all embodiments of the present disclosure.

In all embodiments of the present disclosure, the denoising network includes a plurality of network layers (for example, M network layers). In an i^{th} denoising process, when denoising the i^{th} denoised feature information of the training image by using the denoising network and by using the text feature information of the prompt word and the second image feature information as the control condition, the electronic device may fuse at least one of the text feature information of the prompt word and the second image feature information with feature information outputted from at least a part of network layers of the denoising network, to bind the text feature information of the prompt word and the second image feature information as a condition to distribution of the training image. For example, the text feature information of the prompt word is fused with feature information outputted from one part of network layers of the denoising network, and the second image feature information is fused with feature information outputted from the other part of network layers of the denoising network. For another example, the text feature information of the prompt word is fused with feature information outputted from a part of network layers of the denoising network, and the second image feature information is fused with feature information outputted from all of the network layers of the denoising network. For another example, the second image feature information is fused with feature information outputted from a part of network layers of the denoising network, and the text feature information of the prompt word is fused with feature information outputted from all of the network layers of the denoising network. For another example, the second image feature information is fused with feature information outputted from all of the network layers of the denoising network, and the text feature information of the prompt word is fused with feature information outputted from all of the network layers of the denoising network.

In all embodiments of the present disclosure, S104-B1 includes the following operations S104-B11 and S104-B12.

S104-B11: The electronic device uses the i^{th} denoised feature information of the training image as feature information inputted to the denoising network.

S104-B12: The electronic device fuses feature information outputted from a first part of network layers of the denoising network at least with the text feature information of the prompt word, and fuses feature information outputted from a second part of network layers of the denoising network at least with the second image feature information, to obtain the i^{th} predicted noise value.

In the i^{th} denoising process, the electronic device obtains the i^{th} denoised feature information of the training image obtained in an (i-1)^{th} denoising process, and inputs the i^{th} denoised feature information of the training image to the denoising network.

In all embodiments of the present disclosure, when using the i^{th} denoised feature information of the training image as the feature information inputted to the denoising network in S104-B11, the electronic device may further fuse the i^{th} denoised feature information of the training image with at least one of the text feature information of the prompt word and the second image feature information, and use fused feature information as feature information inputted to the 1^{st} network layer of the denoising network.

As shown in FIG. 10, the denoising network includes the plurality of network layers. The electronic device fuses the feature information outputted from the first part of network layers of the denoising network at least with the text feature information of the prompt word, and fuses the feature information outputted from the second part of network layers of the denoising network at least with the second image feature information, to obtain the i^{th} predicted noise value.

In all embodiments of the present disclosure, there is no overlapping network layer between the first part of network layers and the second part of network layers.

In all embodiments of the present disclosure, there may be an overlapping network layer between the first part of network layers and the second part of network layers.

In all embodiments of the present disclosure, there is one or more other network layers between the first part of network layers and the second part of network layers, that is, the first part of network layers and the second part of network layers are discontinuous.

In all embodiments of the present disclosure, the first network layers (or the second part of network layers) may be continuous network layers or discontinuous network layers of the denoising network.

The fusing the feature information outputted from the first part of network layers of the denoising network at least with the text feature information of the prompt word, and fusing the feature information outputted from the second part of network layers of the denoising network at least with the second image feature information, to obtain the i^{th} predicted noise value in S104-B12 includes at least cases shown in the following examples.

In an example, as shown in FIG. 11, the electronic device separately fuses feature information outputted from each network layer of the denoising network with the text feature information of the prompt word and the second image feature information, and uses fused feature information as feature information inputted to a next network layer; and by analogy, obtains feature information outputted from a last network layer of the denoising network as the i^{th} predicted noise value. In this example, the first part of network layers and the second part of network layers are the same, and both are the M network layers of the denoising network.

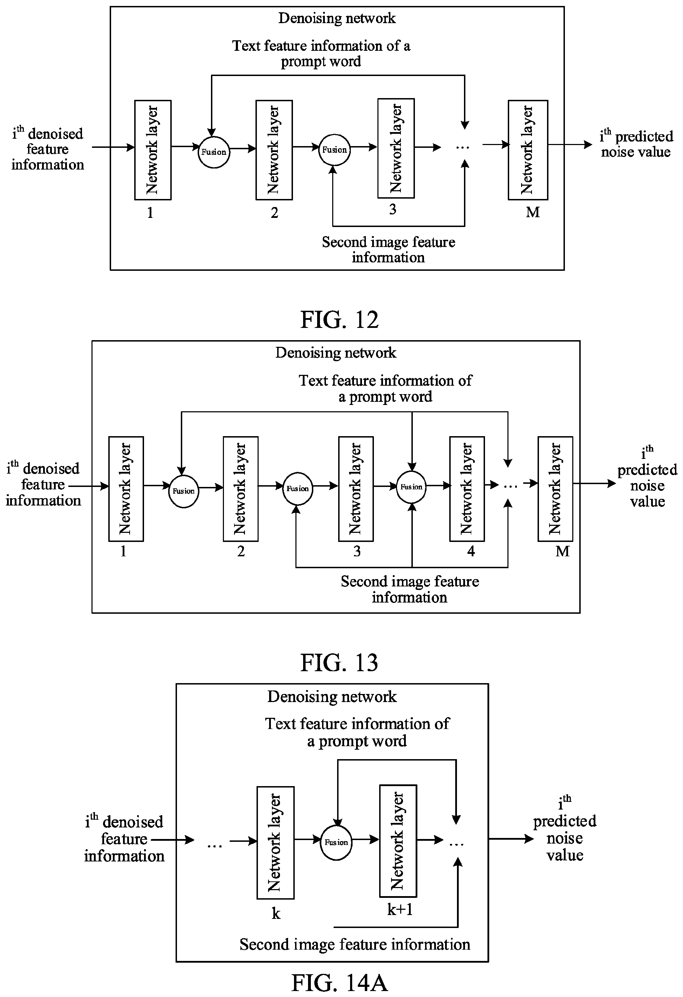

In an example, the electronic device fuses the feature information outputted from the first part of network layers of the denoising network with the text feature information of the prompt word, and fuses the feature information outputted from the second part of network layers of the denoising network with the second image feature information. The first part of network layers and the second part of network layers do not include a same network layer. For example, as shown in FIG. 12, the electronic device fuses feature information 1 outputted from the 1^{st} network layer of the denoising network with the text feature information of the prompt word, and uses fused feature information as feature information inputted to the 2^{nd} network layer; fuses feature information 2 outputted from the 2^{nd} network layer with the second image feature information, and uses fused feature information as feature information inputted to the 3^{rd} network layer; and by analogy, obtains feature information outputted from a last network layer of the denoising network as the i^{th} predicted noise value.

In an example, the electronic device fuses the feature information outputted from the first part of network layers of the denoising network with at least one of the text feature information of the prompt word and the second image feature information, and separately fuses the feature information outputted from the second part of network layers of the denoising network with the text feature information of the prompt word and the second image feature information. The first part of network layers and the second part of network layers do not include a same network layer. For example, as shown in FIG. 13, the electronic device fuses feature information 1 outputted from the 1^{st} network layer of the denoising network with the text feature information of the prompt word (or the second image feature information), and uses fused feature information as feature information inputted to the 2^{nd} network layer; fuses feature information 2 outputted from the 2^{nd} network layer with the second image feature information (or the text feature information of the prompt word), and uses fused feature information as feature information inputted to the 3^{rd} network layer; fuses feature information 3 outputted from the 3^{rd} network layer with the second image feature information and the text feature information of the prompt word, and uses fused feature information as feature information inputted to the 4^{th} network layer; and by analogy, obtains feature information outputted from a last network layer of the denoising network as the i^{th} predicted noise value.

A specific manner of fusing the feature information outputted from a part or all of the network layers of the denoising network with at least one of the text feature information of the prompt word and the second image feature information is not limited in all embodiments of the present disclosure, provided that consideration of the second image feature information and the text feature information of the prompt word during denoising of the i^{th} denoised feature information of the training image by the denoising network is ensured.

In all embodiments of the present disclosure, for ease of description of a process of fusing feature information outputted from a network layer of the denoising network with at least one of the text feature information of the prompt word and the second image feature information, a k^{th} network layer of the denoising network is used herein as an example for description. In this case, S104-B12 may include the following operations S104-B12-a and S104-B12-b.

S104-B12-a: The electronic device fuses, for the k^{th} network layer of the denoising network, feature information outputted from the k^{th} network layer with at least one of the text feature information of the prompt word and the second image feature information, to obtain feature information inputted to a (k+1)^{th} network layer of the denoising network, k being a positive integer.

S104-B12-b: The electronic device obtains the i^{th} predicted noise value based on the feature information inputted to the (k+1)^{th} network layer.

A specific network structure of the denoising network is not limited in all embodiments of the present disclosure. For example, the denoising network may be any neural network for predicting a noise value based on noise-added image feature information and text feature information. For example, the denoising network may be a U-Net network, configured for diffusing, while removing noise in image information, denoised image feature information to the preset liveness attack type indicated by the prompt word and the second image feature information corresponding to the preset liveness attack type, to generate the second image feature information that satisfies the preset liveness attack type indicated by the prompt word and that corresponds to the preset liveness attack type.

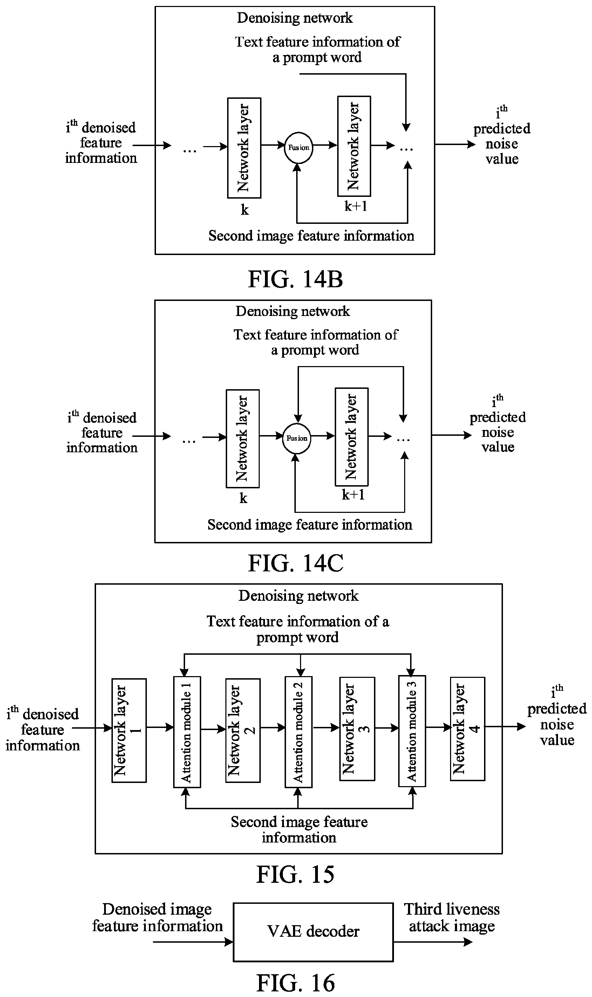

In all embodiments of the present disclosure, for the k^{th} network layer of the denoising network, the electronic device fuses the feature information outputted from the k^{th} network layer with at least one of the text feature information of the prompt word and the second image feature information, to obtain the feature information inputted to the (k+1)^{th} network layer of the denoising network. For example, as shown in FIG. 14A, the electronic device fuses the feature information outputted from the k^{th} network layer of the denoising network with the text feature information of the prompt word, and uses fused feature information as the feature information inputted to the (k+1)^{th} network layer. For another example, as shown in FIG. 14B, the electronic device fuses the feature information outputted from the k^{th} network layer with the second image feature information, and uses fused feature information as the feature information inputted to the (k+1)^{th} network layer of the denoising network. For another example, as shown in FIG. 14C, the electronic device fuses the feature information outputted from the k^{th} network layer with the second image feature information and the text feature information of the prompt word, and uses fused feature information as the feature information inputted to the (k+1)^{th} network layer of the denoising network.

A specific manner in which the electronic device fuses the feature information outputted from the k^{th} network layer with at least one of the text feature information of the prompt word and the second image feature information, to obtain the feature information inputted to the (k+1)^{th} network layer of the denoising network is not limited in all embodiments of the present disclosure.

In all embodiments of the present disclosure, the electronic device fuses the feature information outputted from the k^{th} network layer with at least one of the text feature information of the prompt word and the second image feature information by using one or more convolutional layers, to obtain the feature information inputted to the (k+1)^{th} network layer of the denoising network.

In all embodiments of the present disclosure, the electronic device adds, multiplies, or concatenates the feature information outputted from the k^{th} network layer and at least one of the text feature information of the prompt word and the second image feature information to obtain the fused feature information, and further determines, based on the fused feature information, the feature information inputted to the (k+1)^{th} network layer. For example, the fused feature information is determined as the feature information inputted to the (k+1)^{th} network layer. For another example, the electronic device performs other processing (for example, convolution and other processing) on the fused feature information, and uses processed feature information as the feature information inputted to the (k+1)^{th} network layer. In all embodiments of the present disclosure, other processing such as convolution may be performed before or after the feature information outputted from the k^{th} network layer is fused with at least one of the text feature information of the prompt word and the second image feature information. This is not limited in all embodiments of the present disclosure.

In all embodiments of the present disclosure, the electronic device fuses the feature information outputted from the k^{th} network layer with at least one of the text feature information of the prompt word and the second image feature information by using an attention mechanism, to obtain the feature information inputted to the (k+1)^{th} network layer.

In all embodiments of the present disclosure, the text feature information of the prompt word as a key value (K) of an attention module (also be referred to as an attention layer), the second image feature information as a representative value (V) of the attention module, and the feature information outputted from the k^{th} network layer as a query value (Q) of the attention module are inputted to the attention module, fusion is performed to obtain the fused feature information, and the feature information inputted to the (k+1)^{th} network layer is further determined based on the fused feature information.

For example, the electronic device may perform information fusion by using the following formula (1): ${A}^{k} = softmax \left(\frac{{Q}^{k} ∗ {K}^{T}}{\sqrt{d}}\right) ∗ V ,$ (1)

*A^{k}* is the fused feature information. *Q^{k}* is the feature information outputted from the k^{th} network layer of the denoising network. *K^{T}* is the text feature information of the prompt word. V is the second image feature information. d is a scaling factor, and is configured for adjustingan input scale of a softmax function.

In all embodiments of the present disclosure, the text feature information of the prompt word as a representative value (V) of an attention module, the second image feature information as a key value (K) of the attention module, and the feature information outputted from the k^{th} network layer as a query value (Q) of the attention module are inputted to the attention module, fusion is performed to obtain the fused feature information, and the feature information inputted to the (k+1)^{th} network layer is further determined based on the fused feature information.

The determining the feature information inputted to the (k+1)^{th} network layer based on the fused feature information includes at least the following several methods: Manner 1: determining the fused feature information as the feature information inputted to the (k+1)^{th} network layer; and Manner 2: processing (for example, convolving) the fused feature information, and determining a processing result as the feature information inputted to the (k+1)^{th} network layer.

The foregoing describes a specific process in which the electronic device fuses the feature information outputted from the k^{th} network layer of the denoising network with at least one of the second image feature information and the text feature information of the prompt word, and uses the fused feature information as the feature information inputted to the (k+1)^{th} network layer. According to the foregoing operations, the electronic device may determine the feature information outputted from the last network layer of the denoising network.

For example, as shown in FIG. 15, it is assumed that the denoising network includes four network layers and three attention modules. In the i^{th} denoising process, the electronic device inputs the i^{th} denoised feature information of the training image to the 1^{st} network layer for processing, to obtain the feature information 1 outputted from the 1^{st} network layer. Then, the electronic device inputs the feature information 1 outputted from the 1^{st} network layer, the text feature information of the prompt word, and the second image feature information to the 1^{st} attention module for fusion processing, to obtain fused feature information 1 outputted from the 1^{st} attention module. The electronic device inputs the fused feature information 1, as the feature information inputted to the 2^{nd} network layer, to the 2^{nd} network layer of the denoising network for processing, to obtain the feature information 2 outputted from the 2^{nd} network layer. Next, the electronic device inputs the feature information 2 outputted from the 2^{nd} network layer, the text feature information of the prompt word, and the second image feature information to the 2^{nd} attention module for fusion processing, to obtain fused feature information 2 outputted from the 2^{nd} attention module. The electronic device inputs the fused feature information 2, as the feature information inputted to the 3^{rd} network layer, to the 3^{rd} network layer of the denoising network for processing, to obtain the feature information 3 outputted from the 3^{rd} network layer. Then, the electronic device inputs the feature information 3 outputted from the 3^{rd} network layer, the text feature information of the prompt word, and the second image feature information to the 3^{rd} attention module for fusion processing, to obtain fused feature information 4 outputted from the 3^{rd} attention module. The electronic device inputs the fused feature information 4, as the feature information inputted to the 4^{th} network layer, to the last network layer of the denoising network for processing, to obtain the feature information 4 outputted from the last network layer. Further, the electronic device obtains the i^{th} predicted noise value based on the feature information 4 outputted from the last network layer.

In an example, the electronic device may determine the feature information outputted from the last network layer of the denoising network as the i^{th} predicted noise value.

Then, operation S104-B2 is performed. The (i+1)^{th} denoised feature information of the training image is obtained based on the i^{th} predicted noise value and the i^{th} denoised feature information of the training image.

For example, a difference between the i^{th} denoised feature information of the training image and the i^{th} predicted noise value is determined as the (i+1)^{th} denoised feature information of the training image.

The electronic device uses the determined (i+1)^{th} denoised feature information of the training image as new i^{th} denoised feature information, and performs operation S104-B1. After N repeated executions, the N^{th} denoised feature information of the training image is obtained, and the N^{th} denoised feature information is used as the denoised image feature information.

Finally, the electronic device performs operation S104-C, that is, the electronic device decodes the denoised image feature information to obtain the third liveness attack image.

In all embodiments of the present disclosure, the denoised image feature information is feature information in the latent space, and the electronic device needs to decode the denoised image feature information to transform the denoised image feature information from the latent space to pixel space, to obtain the third liveness attack image.

A specific manner in which the electronic device decodes the denoised image feature information to obtain the third liveness attack image is not limited in all embodiments of the present disclosure. For example, the electronic device decodes the denoised image feature information by using an image decoder, to obtain the third liveness attack image.

In all embodiments of the present disclosure, as shown in FIG. 16, the electronic device decodes the denoised image feature information by using a VAE decoder, to obtain the third liveness attack image. The third liveness attack image is generated based on the prompt word and the second image feature information, so that the generated third liveness attack image not only meets the requirement of the preset liveness attack type indicated by the prompt word, but also includes an image detail feature corresponding to the preset liveness attack type. Therefore, an image generation effect is improved.

The VAE decoder may be a pre-trained decoder. In all embodiments of the present disclosure, end-to-end training may be performed on the VAE decoder together with the image generation model.

According to the foregoing operations, the electronic device processes the first image feature information of the training image, the text feature information of the prompt word, and the second image feature information by using the image generation model, to generate the third liveness attack image. Then, operation S105 is performed.

S105: The electronic device determines a loss of the image generation model based on the second image feature information and the third liveness attack image, and trains the image generation model based on the loss.

In all embodiments of the present disclosure, the electronic device processes the first image feature information of the training image, the text feature information of the prompt word, and the second image feature information by using the image generation model, to generate the third liveness attack image. Then, the electronic device determines the loss of the image generation model based on the third liveness attack image and the second image feature information. Further, the electronic device trains the image generation model based on the loss.

A specific manner in which the electronic device determines the loss of the image generation model based on the third liveness attack image and the second image feature information is not limited in all embodiments of the present disclosure.

In all embodiments of the present disclosure, liveness attack feature information of the third liveness attack image restored by using the image generation model is expected to remain consistent with the second image feature information. Based on this, S105 includes the following operations S 105-A and S105-B.

S105-A: The electronic device performs liveness attack feature extraction on the third liveness attack image to obtain the liveness attack feature information corresponding to the third liveness attack image.

S105-B: The electronic device determines the loss of the image generation model based on the second image feature information and the liveness attack feature information of the third liveness attack image.

In this implementation, when determining the loss of the image generation model based on the third liveness attack image and the second image feature information, the electronic device performs liveness attack feature extraction on the third liveness attack image to obtain the liveness attack feature information corresponding to the third liveness attack image, and then determines the loss of the image generation model based on the liveness attack feature information of the third liveness attack image and the second image feature information.

A specific manner in which the electronic device determines the loss of the image generation model based on the liveness attack feature information of the third liveness attack image and the second image feature information is not limited in all embodiments of the present disclosure. For example, the liveness attack feature information corresponding to the third liveness attack image and the second image feature information are substituted into a preset loss function to calculate the loss of the image generation model. A specific type of the preset loss function is not limited in all embodiments of the present disclosure. For example, the preset loss function may be a cross-entropy loss function. For another example, the electronic device may determine a difference between the liveness attack feature information corresponding to the third liveness attack image and the second image feature information, and determine the loss of the model based on the difference.

In all embodiments of the present disclosure, if the second image feature information is the texture feature information of the training image, the performing liveness attack feature extraction on the third liveness attack image to obtain the liveness attack feature information of the third liveness attack image includes: performing texture feature extraction on the third liveness attack image to obtain texture feature information of the third liveness attack image. Correspondingly, the determining the loss of the image generation model based on the second image feature information and the liveness attack feature information of the third liveness attack image includes: determining the loss of the image generation model based on the texture feature information of the training image and the texture feature information of the third liveness attack image.

A specific manner in which the electronic device determines the loss of the image generation model based on the texture feature information of the third liveness attack image and the texture feature information of the training image is not limited in all embodiments of the present disclosure. For example, the texture feature information of the third liveness attack image and the texture feature information of the training image are substituted into a preset loss function to calculate the loss of the image generation model. A specific type of the preset loss function is not limited in all embodiments of the present disclosure. For example, the preset loss function may be a cross-entropy loss function.

In all embodiments of the present disclosure, the electronic device determines a difference between the texture feature information of the training image and the texture feature information of the third liveness attack image, and determines the loss of the image generation model based on the difference.

In an example, the loss of the image generation model includes a texture loss.

For example, the electronic device may determine the texture loss *Lₘₛₑ* by using the following formula (2): ${L}_{mse} = {\left‖{f}_{ori}-{f}_{rec}\right‖}_{2}$ (2)

fₒᵣᵢ represents the texture feature information of the training image. f_{rec} represents the texture feature information of the third liveness attack image. ∥ ∥₂ is a Euclidean distance.

In an example, the loss of the image generation model in all embodiments of the present disclosure further includes a diffusion loss. The diffusion loss may be calculated by using an MSE loss function. This is not limited in all embodiments of the present disclosure.

According to the foregoing operations, after determining the loss of the image generation model, the electronic device updates a parameter of the image generation model based on the loss. In addition, whether a training end condition of the image generation model is satisfied is determined. The training end condition may be that a loss of the model satisfies a preset loss, or a quantity of times of training reaches a preset quantity of times. If the training end condition of the model is not satisfied currently, another batch of training samples are selected, and the image generation model with an updated parameter is trained by using this batch of training samples in a same manner as the foregoing. The operations are repeatedly performed, and when the training end condition of the model is satisfied, the trained image generation model is finally obtained.

According to the model training method provided in all embodiments of the present disclosure, the training image and the prompt word are obtained, the prompt word indicating the preset liveness attack type, and the training image being a biometric feature image or a liveness attack image. Then, image feature extraction is performed on the training image to obtain the first image feature information of the training image, text feature extraction is performed on the prompt word to obtain the text feature information of the prompt word, and the second image feature information corresponding to the preset liveness attack type is determined. Further, the text feature information of the prompt word, the first image feature information, and the second image feature information are inputted to the image generation model, to generate, by using the image generation model based on the first image feature information of the training image, the third liveness attack image conforming to the text feature information and the second image feature information. The loss of the image generation model is determined based on the training image and the third liveness attack image, and the image generation model is trained based on the loss. As can be seen, in all embodiments of the present disclosure, when the third liveness attack image is generated based on the training image and the prompt word, the training image is processed by using the second image feature information and the prompt word as the control condition, to generate the third liveness attack image, so that the generated third liveness attack image not only satisfies the preset liveness attack type indicated by the prompt word, but also includes the image detail feature corresponding to the preset liveness attack type. Therefore, generation quality of the third liveness attack image generated by the model is improved. In addition, in all embodiments of the present disclosure, the loss of the image generation model is determined based on the second image feature information and the third liveness attack image, so that the image generation model can pay attention to image detail features of a liveness attack, improving image generation performance of the image generation model.

The foregoing describes the training process of the image generation model. The following describes an image processing process performed based on the trained image generation model.

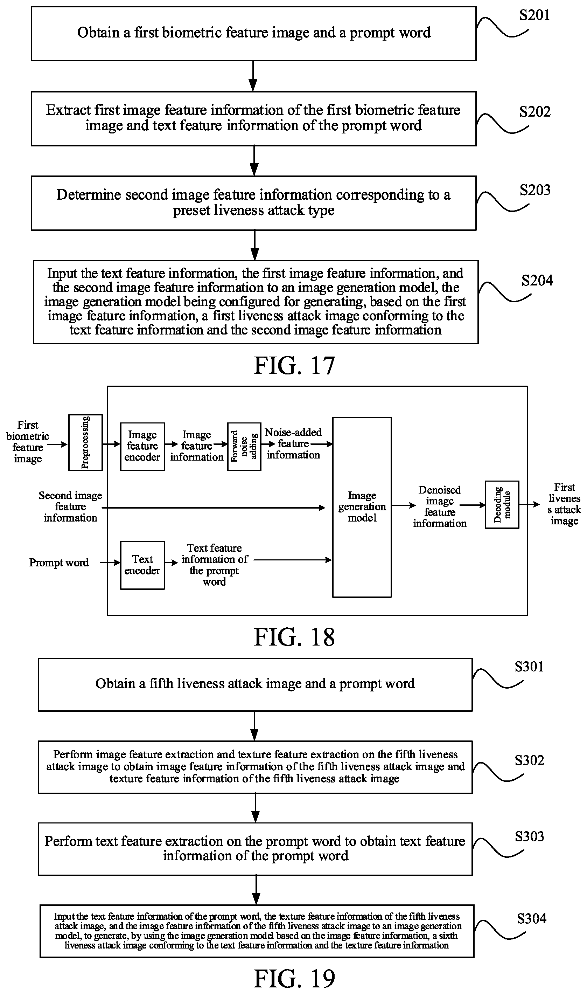

FIG. 17 is a schematic flowchart of an image processing method according to an embodiment of the present disclosure. An execution body of all embodiments of the present disclosure may be an apparatus having an image processing function, for example, an image processing apparatus. The image processing apparatus may be the server 102 or the terminal device 101 shown in FIG. 1, or may be a system including the server 102 or the terminal device 101 shown in FIG. 1. For ease of description, the method in this embodiment of the present disclosure is described in the following embodiments by using an electronic device as an example.

As shown in FIG. 17, the image processing method in this embodiment of the present disclosure includes the following operations.

S201: The electronic device obtains a first biometric feature image and a prompt word.

The prompt word indicates a preset liveness attack type.

The image processing method in all embodiments of the present disclosure may be applied to different fields, to generate images meeting different requirements.

In an example, the image processing method in all embodiments of the present disclosure may be applied to the field of AI drawing, to generate an image meeting a requirement.

In an example, the image processing method in all embodiments of the present disclosure may be applied to the field of training sample generation, to generate a training sample meeting a requirement. For example, the image processing method may be used to generate training data for a liveness detection model, for example, used to generate a realistic high-quality liveness attack sample.

In all embodiments of the present disclosure, when the image processing method is applied to different fields, first biometric feature images corresponding to the fields may be obtained.

The first biometric feature image in all embodiments of the present disclosure may be understood as a to-be-processed or to-be-reconstructed image. The first biometric feature image includes at least one object.

In all embodiments of the present disclosure, the prompt word is configured for indicating the preset liveness attack type.

The liveness attack type in all embodiments of the present disclosure includes a 3D mask, a printed photo, a screen replay, a 3D head model, and another attack type. In all embodiments of the present disclosure, different liveness attack types may have different liveness attack features. In all embodiments of the present disclosure, the prompt word may be used to indicate the preset liveness attack type, for example, indicate that the preset liveness attack type is a 3D mask or a screen replay.

A specific manner in which the electronic device obtains the first biometric feature image and the prompt word is not limited in all embodiments of the present disclosure.

In all embodiments of the present disclosure, the prompt word and the first biometric feature image are both inputted by an object.

In all embodiments of the present disclosure, the first biometric feature image is generated by the electronic device, and the prompt word is inputted by an object.

S202: The electronic device extracts first image feature information of the first biometric feature image and text feature information of the prompt word.

In all embodiments of the present disclosure, after the electronic device obtains the first biometric feature image and the prompt word corresponding to the first biometric feature image according to the foregoing operations, to implement fusion between image information of the first biometric feature image and semantic information of the prompt word, the electronic device first extracts the first image feature information of the first biometric feature image and the text feature information of the prompt word.

In all embodiments of the present disclosure, before extracting the first image feature information of the first biometric feature image, the electronic device first preprocesses the first biometric feature image to obtain a preprocessed first biometric feature image.

A specific manner of preprocessing the first biometric feature image is not limited in all embodiments of the present disclosure. For example, definition and sharpness of the first biometric feature image are processed.

In an example, the electronic device crops, based on an input image size of the image generation model, the first biometric feature image to be consistent with the input image size of the image generation model.

In some examples, the electronic device performs image matting on the first biometric feature image to extract an object region in the first biometric feature image, and then adjusts a size of the object region to a first size. Then, the electronic device center-crops the object region of the first size to a second size, to obtain the preprocessed first biometric feature image. The second size is the input image size required by the image generation model.

Then, the electronic device performs image feature extraction on the preprocessed first biometric feature image.

As shown in FIG. 18, in all embodiments of the present disclosure, the first biometric feature image is encoded by using an image feature encoder, to compress the first biometric feature image from pixel space to latent space, to obtain the first image feature information of the first biometric feature image. A main objective of this part is to represent an image feature by using a high-level semantic feature. This can not only reduce a dimensionality of original image space to improve an image processing speed, but also facilitate better interaction with a subsequent condition feature (that is, the text feature information of the prompt word).

A specific network structure of the image feature encoder and/or decoder is not limited in all embodiments of the present disclosure. For example, the image feature encoder and/or decoder may be a VAE encoder or a CLIP image feature codec.

In all embodiments of the present disclosure, the electronic device not only extracts the first image feature information of the first biometric feature image, but also extracts the text feature information of the prompt word.

As shown in FIG. 18, in all embodiments of the present disclosure, the electronic device performs text feature extraction on the prompt word by using a text encoder, to obtain the text feature information of the prompt word. A specific network structure of the text encoder is not limited in all embodiments of the present disclosure. For example, the text encoder may be a CLIP text encoder.

In addition to extracting the first image feature information of the first biometric feature image and the text feature information of the prompt word by using the foregoing method, the electronic device may also obtain the first image feature information of the first biometric feature image and the text feature information of the prompt word in another manner. This is not limited in all embodiments of the present disclosure.

For an exemplary implementation process of S202, refer to related descriptions of S102. Details are not described herein again.

After extracting the first image feature information of the first biometric feature image and the text feature information of the prompt word, the electronic device performs the following operation S203.

S203: The electronic device determines second image feature information corresponding to the preset liveness attack type.

There is no specific execution sequence between S202 and S203. In other words, S202 may be performed before S203, may be performed after S203, or may be performed synchronously with S203.

A specific manner of determining the second image feature information corresponding to the preset liveness attack type in all embodiments of the present disclosure includes but is not limited to the following several manners.

Manner 1: Determine N pieces of candidate image feature information corresponding to the preset liveness attack type, and select one piece of candidate image feature information from the N pieces of candidate image feature information as the second image feature information, N being a positive integer, and the N pieces of candidate image feature information being image feature information of N liveness attacks that belong to the preset liveness attack type.

The liveness attack type in all embodiments of the present disclosure includes a 3D mask, a printed photo, a screen replay, a 3D head model, and another attack type. In all embodiments of the present disclosure, different liveness attack types may have different liveness attack features.

For example, a 3D mask and a 3D head model have significant differences from a real living body in material, and different materials have different texture features. Therefore, features of a 3D mask liveness attack and a 3D head model liveness attack may include texture and the like.

For another example, compared with a real living body, a printed photo and a screen replay may have a shadow, an image edge, and the like. Therefore, features of a printed photo liveness attack and a screen replay liveness attack may include a shadow, an image edge, and the like.

In Manner 1, the electronic device determines, in the foregoing manner, the N pieces of candidate image feature information corresponding to the preset liveness attack type. The electronic device selects one piece of candidate image feature information from the N pieces of candidate image feature information as the second image feature information. For example, the electronic device determines a default piece of candidate image feature information as the second image feature information. For another example, the electronic device displays the N pieces of candidate image feature information to the object, and the object selects one piece of candidate image feature information from the N pieces of candidate image feature information as the second image feature information.

Manner 2: Obtain a second liveness attack image based on the preset liveness attack type, and extract liveness attack feature information of the second liveness attack image as the second image feature information.

For example, when the preset liveness attack type is a screen replay, the second liveness attack image is an image obtained through the screen replay. The electronic device may extract edge feature information and the like of the second liveness attack image as the second image feature information.

For example, when the preset liveness attack type is a 3D mask or a 3D head model, the second liveness attack image is an image of the 3D mask or the 3D head model. The electronic device may extract texture feature information of the second liveness attack image as the second image feature information.

A specific manner in which the electronic device extracts the texture feature information of the second liveness attack image is not limited in all embodiments of the present disclosure. For example, as shown in FIG. 18, the electronic device extracts the texture feature information of the second liveness attack image by using a texture feature extraction module. In all embodiments of the present disclosure, the texture feature extraction module may include a gray-level co-occurrence matrix, a Tamura texture feature, an autoregressive texture model, wavelet transform or the like.

In all embodiments of the present disclosure, the N pieces of candidate image feature information or the liveness attack feature information of the second liveness attack image is image texture feature information.

S204: The electronic device inputs the text feature information, the first image feature information, and the second image feature information to the image generation model, the image generation model being configured for generating, based on the first image feature information, a first liveness attack image conforming to the text feature information and the second image feature information.

In all embodiments of the present disclosure, to ensure that an image generated by the image generation model not only meets a requirement of the prompt word, but also has an image detail feature corresponding to the preset liveness attack type, during image processing, first, the first image feature information of the first biometric feature image is extracted, the text feature information of the prompt word is extracted, and the second image feature information corresponding to the preset liveness attack type is determined. As shown in FIG. 18, the first image feature information of the first biometric feature image, the text feature information of the prompt word, and the second image feature information are further inputted to the image generation model, so that the image generation model processes the first image feature information of the first biometric feature image by using the text feature information of the prompt word and the second image feature information as a control condition, to generate the first liveness attack image. The second image feature information and the text feature information of the prompt word are considered when the first liveness attack image is generated, so that the generated first liveness attack image not only meets a requirement of the preset liveness attack type indicated by the prompt word, but also includes the second image feature information corresponding to the preset liveness attack type. Therefore, a generation effect of the first liveness attack image is improved.

A specific network structure of the image generation model is not limited in all embodiments of the present disclosure.

In all embodiments of the present disclosure, if the image generation model includes a denoising network, S204 includes the following operations S204-A to S204-C.

S204-A: The electronic device performs noise adding on the first image feature information of the first biometric feature image to obtain noise-added feature information of the first biometric feature image.

S204-B: The electronic device denoises the noise-added feature information of the first biometric feature image by using the denoising network based on the text feature information of the prompt word and the second image feature information, to obtain denoised image feature information.

S204-C: The electronic device decodes the denoised image feature information to obtain the first liveness attack image.

In this implementation, the first liveness attack image is generated by using a forward diffusion technology and a reverse diffusion technology. In a forward diffusion process, noise is added to an image to gradually convert the image into a featureless noisy image. Reverse diffusion is a process of subtracting the estimated noise from the image obtained through noise adding.

In all embodiments of the present disclosure, after obtaining the first image feature information of the first biometric feature image, the second image feature information, and the text feature information of the prompt word according to the foregoing operations, the electronic device performs noise adding on the first image feature information of the first biometric feature image, for example, adds a preset noise value to the first image feature information of the first biometric feature image, to obtain the noise-added feature information of the first biometric feature image. For example, Gaussian noise may be gradually added to the first image feature information of the first biometric feature image, to obtain the noise-added feature information of the first biometric feature image. This process may be understood as a forward diffusion process.

Then, the electronic device denoises the noise-added feature information of the first biometric feature image based on the second image feature information and the text feature information of the prompt word, to obtain the denoised image feature information. This process may be understood as a reverse diffusion process.

In all embodiments of the present disclosure, S204-B includes the following operations S204-B1 to S204-B3.

S204-B1: The electronic device denoises i^{th} denoised feature information of the first biometric feature image by using the denoising network based on the text feature information of the prompt word and the second image feature information, to obtain an i^{th} predicted noise value, i being a positive integer less than or equal to N, and the i^{th} denoised feature information being the noise-added feature information of the first biometric feature image if i is 1.

S204-B2: The electronic device obtains (i+1)^{th} denoised feature information of the first biometric feature image based on the i^{th} predicted noise value and the i^{th} denoised feature information of the first biometric feature image.

S204-B3: The electronic device uses the (i+1)^{th} denoised feature information as new i^{th} denoised feature information, and repeatedly performs the above operations to obtain N^{th} denoised feature information of the first biometric feature image.

S204-B4: The electronic device determines the N^{th} denoised feature information as the denoised image feature information.

In this implementation, the electronic device denoises the noise-added feature information of the first biometric feature image for a plurality of times by using the denoising network and by using the text feature information of the prompt word and the second image feature information as a control condition. The denoising network is configured for predicting a noise value during each denoising process. Specifically, during denoising, a noise value currently predicted by the denoising network is subtracted from previous denoised feature information, to generate new denoised feature information, and the new denoised feature information is inputted to the denoising network for denoising again. The operations are repeated for a plurality of times, until noise added to the first biometric feature image is removed. In the denoising process, in addition to the new denoised feature information of the first biometric feature image and the text feature information of the prompt word, the second image feature information is also inputted to the denoising network. In this way, in the denoising process, image feature information is brought close to the text feature information of the prompt word and the second image feature information, so that the image feature information obtained finally through denoising fuses the text feature information of the prompt word and the second image feature information. In this way, the first liveness attack image generated based on the image feature information obtained through denoising not only meets the requirement of the preset liveness attack type indicated by the prompt word, but also includes an image detail feature corresponding to the preset liveness attack type. Therefore, an image generation effect of the image generation model is improved.

The following describes a specific process of denoising the i^{th} denoised feature information of the first biometric feature image by using the denoising network and by using the text feature information of the prompt word and the second image feature information as the control condition, to obtain the i^{th} predicted noise value in S204-B1.

In all embodiments of the present disclosure, the denoising network includes a plurality of network layers (for example, M network layers). In an i^{th} denoising process, when denoising the i^{th} denoised feature information of the first biometric feature image by using the denoising network and by using the text feature information and the second image feature information as a control condition, the electronic device may fuse at least one of the text feature information of the prompt word and the second image feature information with feature information outputted from at least a part of network layers of the denoising network, to bind the text feature information of the prompt word and the second image feature information as a condition to distribution of the first biometric feature image.

A specific manner in which the electronic device denoises the i^{th} denoised feature information of the first biometric feature image by using the denoising network and by using the text feature information of the prompt word and the second image feature information as the control condition, to obtain the i^{th} predicted noise value is not limited in all embodiments of the present disclosure.

In all embodiments of the present disclosure, S204-B1 includes the following operations S204-B11 and S204-B12.

S204-B11: The electronic device uses the i^{th} denoised feature information of the first biometric feature image as feature information inputted to the denoising network.

S204-B12: The electronic device fuses feature information outputted from a first part of network layers of the denoising network at least with the text feature information of the prompt word, and fuses feature information outputted from a second part of network layers of the denoising network at least with the second image feature information, to obtain the i^{th} predicted noise value.

In an example, the denoising network includes the plurality of network layers. The electronic device fuses the feature information outputted from the first part of network layers of the denoising network at least with the text feature information of the prompt word, and fuses the feature information outputted from the second part of network layers of the denoising network at least with the second image feature information, to obtain the i^{th} predicted noise value. The first part of network layers are not completely the same as the second part of network layers.

In an example, the electronic device separately fuses feature information outputted from each network layer of the denoising network with the text feature information of the prompt word and the second image feature information, and uses fused feature information as feature information inputted to a next network layer; and by analogy, obtains feature information outputted from a last network layer of the denoising network as the i^{th} predicted noise value. The first part of network layers and the second part of network layers are the same, and both are the M network layers of the denoising network.

In an example, the electronic device fuses the feature information outputted from the first part of network layers of the denoising network with the text feature information of the prompt word, and fuses the feature information outputted from the second part of network layers of the denoising network with the second image feature information. The first part of network layers and the second part of network layers do not include a same network layer. For example, the electronic device fuses feature information 1 outputted from the 1^{st} network layer of the denoising network with the text feature information of the prompt word, and uses fused feature information as feature information inputted to the 2^{nd} network layer; fuses feature information 2 outputted from the 2^{nd} network layer with the second image feature information, and uses fused feature information as feature information inputted to the 3^{rd} network layer; and by analogy, obtains feature information outputted from a last network layer of the denoising network as the i^{th} predicted noise value.

In an example, the electronic device fuses the feature information outputted from the first part of network layers of the denoising network with at least one of the text feature information of the prompt word and the second image feature information, and fuses the feature information outputted from the second part of network layers of the denoising network with the text feature information of the prompt word and the second image feature information. The first part of network layers and the second part of network layers do not include a same network layer. For example, the electronic device fuses feature information 1 outputted from the 1^{st} network layer of the denoising network with the text feature information of the prompt word, and uses fused feature information as feature information inputted to the 2^{nd} network layer; fuses feature information 2 outputted from the 2^{nd} network layer with the second image feature information, and uses fused feature information as feature information inputted to the 3^{rd} network layer; fuses feature information 3 outputted from the 3^{rd} network layer with the second image feature information and the text feature information of the prompt word, and uses fused feature information as feature information inputted to the 4^{th} network layer; and by analogy, obtains feature information outputted from a last network layer of the denoising network as the i^{th} predicted noise value.

A specific manner of fusing the feature information outputted from a part or all of the network layers of the denoising network with at least one of the text feature information of the prompt word and the second image feature information is not limited in all embodiments of the present disclosure, provided that consideration of the second image feature information and the text feature information of the prompt word during denoising of the i^{th} denoised feature information of the first biometric feature image by the denoising network is ensured.

In all embodiments of the present disclosure, for ease of description of a process of fusing feature information outputted from a network layer of the denoising network with at least one of the text feature information of the prompt word and the second image feature information, a k^{th} network layer of the denoising network is used herein as an example for description. In this case, S204-B12 may include the following operations S204-B12-a and S204-B12-b.

S204-B12-a: The electronic device fuses, for the k^{th} network layer of the denoising network, feature information outputted from the k^{th} network layer with at least one of the text feature information of the prompt word and the second image feature information, to obtain feature information inputted to a (k+1)^{th} network layer of the denoising network, k being a positive integer.

S204-B12-b: The electronic device obtains the i^{th} predicted noise value based on the feature information inputted to the (k+1)^{th} network layer.

A specific network structure of the denoising network is not limited in all embodiments of the present disclosure. For example, the denoising network may be any neural network for predicting a noise value based on noise-added image feature information and text feature information. For example, the denoising network may be a U-Net network, configured for diffusing, while removing noise in image information, denoised image feature information to the preset liveness attack type indicated by the prompt word and the second image feature information corresponding to the preset liveness attack type, to generate the second image feature information that satisfies the preset liveness attack type indicated by the prompt word and that corresponds to the preset liveness attack type.

In all embodiments of the present disclosure, for the k^{th} network layer of the denoising network, the electronic device fuses the feature information outputted from the k^{th} network layer with at least one of the text feature information of the prompt word and the second image feature information, to obtain the feature information inputted to the (k+1)^{th} network layer of the denoising network.

A specific manner in which the electronic device fuses the feature information outputted from the k^{th} network layer with at least one of the text feature information of the prompt word and the second image feature information, to obtain the feature information inputted to the (k+1)^{th} network layer of the denoising network is not limited in all embodiments of the present disclosure.

In all embodiments of the present disclosure, the electronic device fuses the feature information outputted from the k^{th} network layer with at least one of the text feature information of the prompt word and the second image feature information by using one or more convolutional layers, to obtain the feature information inputted to the (k+1)^{th} network layer of the denoising network.

In all embodiments of the present disclosure, the electronic device fuses the feature information outputted from the k^{th} network layer with at least one of the text feature information of the prompt word and the second image feature information by using an attention mechanism, to obtain the feature information inputted to the (k+1)^{th} network layer.

In all embodiments of the present disclosure, the text feature information of the prompt word as a key value of an attention module, the second image feature information as a representative value (V) of the attention module, and the feature information outputted from the k^{th} network layer as a query value (Q) of the attention module are inputted to the attention module, fusion is performed to obtain the feature information inputted to the (k+1)^{th} network layer.

According to the foregoing operations, the electronic device may determine the feature information outputted from the last network layer of the denoising network. In an example, the electronic device may determine the feature information outputted from the last network layer of the denoising network as the i^{th} predicted noise value.

Then, operation S204-B2 is performed. (i+1)^{th} denoised feature information of the first biometric feature image is obtained based on the i^{th} predicted noise value and the i^{th} denoised feature information of the first biometric feature image. For example, a difference between the i^{th} denoised feature information of the first biometric feature image and the i^{th} predicted noise value is determined as the (i+1)^{th} denoised feature information of the first biometric feature image.

The electronic device uses the determined (i+1)^{th} denoised feature information of the first biometric feature image as new i^{th} denoised feature information, and performs operation S204-B1. After N repeated executions, the N^{th} denoised feature information of the first biometric feature image is obtained, and the N^{th} denoised feature information is used as the denoised image feature information.

Finally, the electronic device performs operation S204-C, that is, the electronic device decodes the denoised image feature information to obtain the first liveness attack image.

In all embodiments of the present disclosure, the denoised image feature information is feature information in the latent space, and the electronic device needs to decode the denoised image feature information to transform the denoised image feature information from the latent space to pixel space, to obtain the first liveness attack image.

In all embodiments of the present disclosure, as shown in FIG. 18, the electronic device decodes the denoised image feature information by using a decoder (for example, a VAE decoder), to obtain the first liveness attack image. The first liveness attack image is generated based on the prompt word and the second image feature information, so that the generated first liveness attack image not only meets the requirement of the preset liveness attack type indicated by the prompt word, but also includes the image detail feature corresponding to the preset liveness attack type. Therefore, an image generation effect is improved.

For specific implementation details of S204, refer to related descriptions of S104. Details are not described herein again.

According to the image processing method provided in all embodiments of the present disclosure, the first biometric feature image and the prompt word are obtained, the prompt word indicating the preset liveness attack type. Then, image feature extraction is performed on the first biometric feature image to obtain first image feature information of the first biometric feature image, and text feature extraction is performed on the prompt word to obtain text feature information of the prompt word. In addition, second image feature information corresponding to the preset liveness attack type is determined. Further, the text feature information, the first image feature information, and the second image feature information are inputted to the image generation model, to generate, by using the image generation model based on the first image feature information, the first liveness attack image conforming to the text feature information and the second image feature information. As can be seen, in all embodiments of the present disclosure, when the first liveness attack image is generated based on the first biometric feature image and the prompt word, the first biometric feature image is processed by using the second image feature information and the prompt word as a control condition, to generate the first liveness attack image, so that the generated first liveness attack image not only meets the requirement of the preset liveness attack type indicated by the prompt word, but also includes an image feature corresponding to the preset liveness attack type. Therefore, generation quality of the first liveness attack image is improved.

The foregoing provides an overall description of the image processing method provided in all embodiments of the present disclosure. The following describes a process in which the image processing method in all embodiments of the present disclosure is applied to generation of a training sample.

FIG. 19 is a schematic flowchart of a training sample generation method according to an embodiment of the present disclosure. An execution body of all embodiments of the present disclosure may be an apparatus having a training sample generation function, for example, a training sample generation apparatus. The training sample generation apparatus may be the server 102 or the terminal device 101 shown in FIG. 1, or may be a system including the server 102 or the terminal device 101 shown in FIG. 1. For ease of description, the method in all embodiments of the present disclosure is described in the following embodiments by using an electronic device as an example.

As shown in FIG. 19, the training sample generation method in this embodiment of the present disclosure includes the following operations.

S301: The electronic device obtains a fifth liveness attack image and a prompt word.

The prompt word indicates a preset liveness attack type.

In the training sample generation method in all embodiments of the present disclosure, generation of training data for a liveness detection model is used as an example.

In an actual use process, liveness detection is usually used in combination with another technology, such as a face identity verification. Liveness detection is used as a first line of defense, and is an important part of authentication security. Currently, the face identity verification has been applied to a plurality of services, such as remote identity verification for banking, face recognition payment, remote authentication for drivers, and an access control system.

In a remote account opening process, to determine a real identity of an account owner, a face identity verification technology is also used, and a liveness detection algorithm is also applied. A specific procedure is as follows: First, the object obtains an image including a face by using a camera on a front-end of an application. The front-end transmits the image to a back-end, and the back-end invokes the algorithm. The algorithm performs liveness detection, and returns a result to the front-end. If liveness is determined, identity verification succeeds; or if liveness is not determined, identity verification fails.

Face identity verification also plays an important role in a face recognition payment process. Liveness detection is an important part for controlling payment security. With a high-precision liveness detection method, some transactions attempted to be performed by illegal attacks can be rejected, thereby ensuring transaction security, and ensuring that benefits of companies and individuals are not damaged.

In the access control system, to improve identity verification efficiency, after a front-end directly obtains a face image, the face image is transmitted to the encapsulated model, determining is performed directly, and a result is fed back.

As can be seen, accuracy of the liveness detection model is of great importance. The liveness detection model needs to be effectively trained, so that the liveness detection model can implement accurate detection. However, because there are many liveness attack types, data collection and annotation with only manpower for training sample construction cannot meet an actual service requirement, and collected data may be homogeneous and singular, making it impossible to construct an effective liveness attack sample. Consequently, the liveness detection model is inaccurate in detection, and there is a risk of identity infringement.

To resolve the technical problem, in all embodiments of the present disclosure, the foregoing image processing method is applied to training sample generation, and the training sample generation method is provided. The fifth liveness attack image and the prompt word are processed by using a trained image generation model, to generate a sixth liveness attack image. The fifth liveness attack image and the sixth liveness attack image are both training samples for the liveness detection model. In other words, with the method in all embodiments of the present disclosure, liveness attack samples for the liveness detection model can be augmented, thereby implementing effective training of the liveness detection model.

The fifth liveness attack image may be a liveness attack image of a material, for example, a printed photon, a screen replay, a 3D head model, or a 3D mask.

For example, the prompt word indicates the preset liveness attack type. For example, if the fifth liveness attack image is a 3D mask, the prompt word is "3D Mask" or "Silica gel", indicating to transform a material of the 3D mask into a silica gel material. In this case, the preset liveness attack type indicated by the prompt word is a 3D mask made of the silica gel material.

For an exemplary implementation process of S301, refer to related descriptions of S201. Details are not described herein again.

S302: The electronic device performs image feature extraction and texture feature extraction on the fifth liveness attack image to obtain image feature information of the fifth liveness attack image and texture feature information of the fifth liveness attack image.

In all embodiments of the present disclosure, after the electronic device obtains the fifth liveness attack image and the prompt word corresponding to the fifth liveness attack image according to the foregoing operations, to implement fusion between image information of the fifth liveness attack image and semantic information of the prompt word, the electronic device first extracts the image feature information of the fifth liveness attack image and the text feature information of the fifth liveness attack image.

In all embodiments of the present disclosure, second image feature information is the texture feature information of the fifth liveness attack image.

In all embodiments of the present disclosure, before extracting the image feature information of the fifth liveness attack image and extracting the texture feature information of the fifth liveness attack image, the electronic device first preprocesses the fifth liveness attack image to obtain a preprocessed fifth liveness attack image.

A specific manner of preprocessing the fifth liveness attack image is not limited in all embodiments of the present disclosure. For example, definition and sharpness of the fifth liveness attack image are processed.

In an example, the electronic device crops, based on an input image size of an image generation model, the fifth liveness attack image to be consistent with the input image size of the image generation model.

In some examples, the electronic device performs image matting on the fifth liveness attack image to extract an object region in the fifth liveness attack image, and then adjusts a size of the object region to a first size. Then, the electronic device center-crops the object region of the first size to a second size, to obtain the preprocessed fifth liveness attack image.

Next, the electronic device performs image feature extraction and texture feature extraction on the preprocessed fifth liveness attack image.

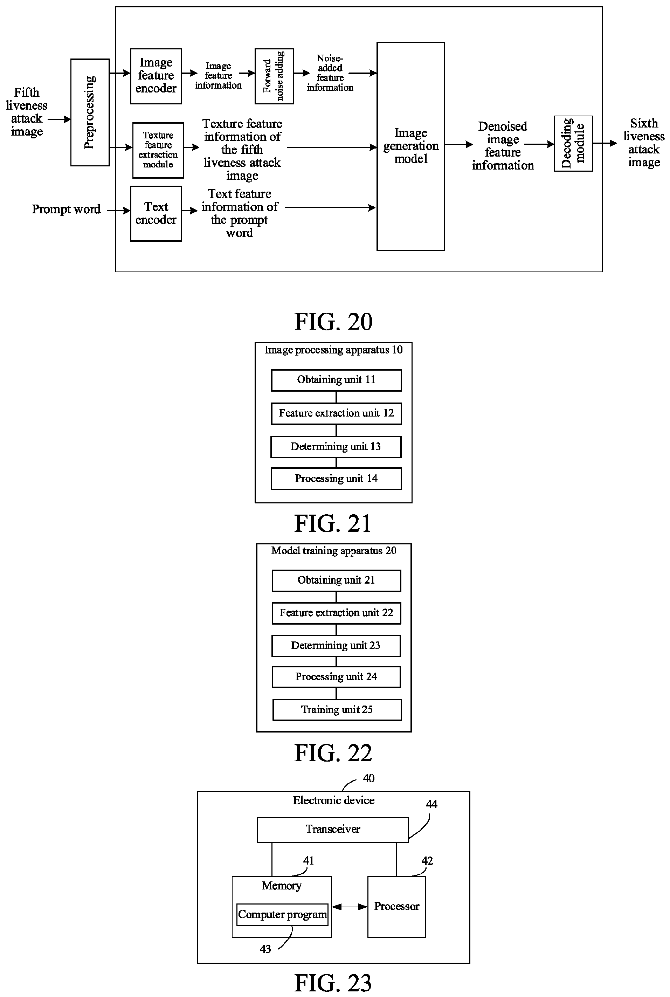

As shown in FIG. 20, in all embodiments of the present disclosure, the fifth liveness attack image is encoded by using an image feature encoder, to compress the fifth liveness attack image from pixel space to latent space, to obtain the image feature information of the fifth liveness attack image. A specific network structure of the image feature encoder is not limited in all embodiments of the present disclosure. For example, the image feature encoder may be a VAE encoder or a CLIP image feature codec.

A specific manner in which the electronic device extracts the texture feature information of the fifth liveness attack image is not limited in all embodiments of the present disclosure. For example, as shown in FIG. 20, the electronic device extracts the texture feature information of the fifth liveness attack image by using a texture feature extraction module. In all embodiments of the present disclosure, the texture feature extraction module may include a gray-level co-occurrence matrix, a Tamura texture feature, an autoregressive texture model, wavelet transform or the like.

For an exemplary implementation process of S302, refer to related descriptions of S202. Details are not described herein again.

S303: The electronic device performs text feature extraction on the prompt word to obtain text feature information of the prompt word.

There is no specific execution sequence between S302 and S303. In other words, S302 may be performed before S303, may be performed after S303, or may be performed synchronously with S303.

As shown in FIG. 20, in all embodiments of the present disclosure, the electronic device performs text feature extraction on the prompt word by using a text encoder, to obtain the text feature information of the prompt word. A specific network structure of the text encoder is not limited in all embodiments of the present disclosure. For example, the text encoder may be a CLIP text encoder.

For an exemplary implementation process of S303, refer to related descriptions of S203. Details are not described herein again.

S304: The electronic device inputs the text feature information of the prompt word, the texture feature information of the fifth liveness attack image, and the image feature information of the fifth liveness attack image to the image generation model, to generate, by using the image generation model based on the image feature information, the sixth liveness attack image conforming to the text feature information and the texture feature information.

As shown in FIG. 20, the image feature information of the fifth liveness attack image, the text feature information of the prompt word, and the texture feature information of the fifth liveness attack image are inputted to the image generation model, so that the image generation model processes the image feature information of the fifth liveness attack image by using the text feature information of the prompt word and the texture feature information of the fifth liveness attack image as a control condition, to generate the sixth liveness attack image. The texture feature information of the fifth liveness attack image and the text feature information of the prompt word are considered when the sixth liveness attack image is generated, so that the generated sixth liveness attack image not only meets a requirement of the prompt word, but also includes a detail feature (for example, a texture feature) of the fifth liveness attack image. Therefore, a generation effect of the sixth liveness attack image is improved.

A specific network structure of the image generation model is not limited in all embodiments of the present disclosure.

In all embodiments of the present disclosure, if the image generation model includes a denoising network, S304 includes the following operations S304-A to S304-C.

S304-A: The electronic device performs noise adding on the image feature information of the fifth liveness attack image to obtain noise-added feature information of the fifth liveness attack image.

S304-B: The electronic device denoises the noise-added feature information of the fifth liveness attack image by using the denoising network and by using the text feature information of the prompt word and the texture feature information of the fifth liveness attack image as a control condition, to obtain denoised image feature information.

S304-C: The electronic device decodes the denoised image feature information to obtain the sixth liveness attack image.

In all embodiments of the present disclosure, S304-B includes the following operations S304-B1 to S304-B3.

S304-B1: The electronic device denoises i^{th} denoised feature information of the fifth liveness attack image by using the denoising network and by using the text feature information of the prompt word and the texture feature information of the fifth liveness attack image as a control condition, to obtain an i^{th} predicted noise value, i being a positive integer less than or equal to N, and the i^{th} denoised feature information being the noise-added feature information of the fifth liveness attack image if i is 1.

S304-B2: The electronic device obtains (i+1)^{th} denoised feature information of the fifth liveness attack image based on the i^{th} predicted noise value and the i^{th} denoised feature information of the fifth liveness attack image.

S304-B3: The electronic device uses the (i+1)^{th} denoised feature information as new i^{th} denoised feature information, and repeatedly performs the above operations to obtain N^{th} denoised feature information of the fifth liveness attack image.

S304-B4: The electronic device determines the N^{th} denoised feature information as the denoised image feature information.

The following describes a specific process of denoising the noise-added feature information of the fifth liveness attack image by using the denoising network and by using the text feature information of the prompt word and the texture feature information of the fifth liveness attack image as the control condition, to obtain the denoised image feature information.

In all embodiments of the present disclosure, a denoising process performed by using the denoising network is an iterative process. For example, the i^{th} denoised feature information of the fifth liveness attack image is denoised by using the denoising network and by using the text feature information of the prompt word and the texture feature information of the fifth liveness attack image as a control condition, to obtain the i^{th} predicted noise value. Then, the (i+1)^{th} denoised feature information of the fifth liveness attack image is obtained based on the i^{th} predicted noise value and the i^{th} denoised feature information of the fifth liveness attack image. Next, the (i+1)^{th} denoised feature information is used as new i^{th} denoised feature information, and the new i^{th} denoised feature information is denoised by using the denoising network and by using the text feature information of the prompt word and the texture feature information of the fifth liveness attack image as a control condition, to obtain an i^{th} predicted noise value, and (i+1)^{th} denoised feature information of the fifth liveness attack image is obtained based on the i^{th} predicted noise value and the i^{th} denoised feature information of the fifth liveness attack image. Then, the (i+1)^{th} denoised feature information is used as new i^{th} denoised feature information, and the above operations are performed. After the denoising operations are repeated for N times, the N^{th} denoised feature information may be obtained. The N^{th} denoised feature information is determined as the denoised image feature information.

The following describes a specific process of denoising the i^{th} denoised feature information of the fifth liveness attack image by using the denoising network and by using the text feature information of the prompt word and the texture feature information of the fifth liveness attack image as the control condition, to obtain the i^{th} predicted noise value in S304-B1.

In all embodiments of the present disclosure, the denoising network includes a plurality of network layers (for example, M network layers). In an i^{th} denoising process, when denoising the i^{th} denoised feature information of the fifth liveness attack image by using the denoising network and by using the text feature information of the prompt word and the texture feature information of the fifth liveness attack image as the control condition, the electronic device may fuse at least one of the text feature information of the prompt word and the texture feature information of the fifth liveness attack image with feature information outputted from at least a part of network layers of the denoising network, to bind the text feature information of the prompt word and the texture feature information of the fifth liveness attack image as a condition to distribution of the fifth liveness attack image.

A specific manner in which the electronic device denoises the i^{th} denoised feature information of the fifth liveness attack image by using the denoising network and by using the text feature information of the prompt word and the texture feature information of the fifth liveness attack image as the control condition, to obtain the i^{th} predicted noise value is not limited in all embodiments of the present disclosure.

In all embodiments of the present disclosure, if the denoising network includes the plurality of network layers, S304-B1 includes the following operations S304-B11 and S304-B12.

S304-B11: The electronic device uses the i^{th} denoised feature information of the fifth liveness attack image as feature information inputted to the denoising network.

S304-B12: The electronic device fuses feature information outputted from a first part of network layers of the denoising network at least with the text feature information of the prompt word, and fuses feature information outputted from a second part of network layers of the denoising network at least with the texture feature information of the fifth liveness attack image, to obtain the i^{th} predicted noise value.

In an example, the denoising network includes the plurality of network layers. The electronic device fuses the feature information outputted from the first part of network layers of the denoising network at least with the text feature information of the prompt word, and fuses the feature information outputted from the second part of network layers of the denoising network at least with the texture feature information of the fifth liveness attack image, to obtain the i^{th} predicted noise value. The first part of network layers are not completely the same as the second part of network layers.

In an example, the electronic device fuses feature information outputted from each network layer of the denoising network with the text feature information of the prompt word and the texture feature information of the fifth liveness attack image, and uses fused feature information as feature information inputted to a next network layer; and by analogy, obtains feature information outputted from a last network layer of the denoising network as the i^{th} predicted noise value. The first part of network layers and the second part of network layers are the same, and both are the M network layers of the denoising network.

In an example, the electronic device fuses the feature information outputted from the first part of network layers of the denoising network with the text feature information of the prompt word, and fuses the feature information outputted from the second part of network layers of the denoising network with the texture feature information of the fifth liveness attack image. The first part of network layers and the second part of network layers do not include a same network layer. For example, the electronic device fuses feature information 1 outputted from the 1^{st} network layer of the denoising network with the text feature information of the prompt word, and uses fused feature information as feature information inputted to the 2^{nd} network layer; fuses feature information 2 outputted from the 2^{nd} network layer with the texture feature information of the fifth liveness attack image, and uses fused feature information as feature information inputted to the 3^{rd} network layer; and by analogy, obtains feature information outputted from a last network layer of the denoising network as the i^{th} predicted noise value.

In an example, the electronic device fuses the feature information outputted from the first part of network layers of the denoising network with at least one of the text feature information of the prompt word and the texture feature information of the fifth liveness attack image, and fuses the feature information outputted from the second part of network layers of the denoising network with the text feature information of the prompt word and the texture feature information of the fifth liveness attack image. The first part of network layers and the second part of network layers do not include a same network layer. For example, the electronic device fuses feature information 1 outputted from the 1^{st} network layer of the denoising network with the text feature information of the prompt word, and uses fused feature information as feature information inputted to the 2^{nd} network layer; fuses feature information 2 outputted from the 2^{nd} network layer with the texture feature information of the fifth liveness attack image, and uses fused feature information as feature information inputted to the 3^{rd} network layer; fuses feature information 3 outputted from the 3^{rd} network layer with the texture feature information of the fifth liveness attack image and the text feature information of the prompt word, and uses fused feature information as feature information inputted to the 4^{th} network layer; and by analogy, obtains feature information outputted from a last network layer of the denoising network as the i^{th} predicted noise value.

In all embodiments of the present disclosure, for ease of description of a process of fusing feature information outputted from a network layer of the denoising network with at least one of the text feature information of the prompt word and the texture feature information of the fifth liveness attack image, a k^{th} network layer of the denoising network is used herein as an example for description. In this case, S304-B12 may include the following operations S304-B12-a and S304-B12-b.

S304-B12-a: The electronic device fuses, for the k^{th} network layer of the denoising network, feature information outputted from the k^{th} network layer with at least one of the text feature information of the prompt word and the texture feature information of the fifth liveness attack image, to obtain feature information inputted to a (k+1)^{th} network layer of the denoising network, k being a positive integer.

S304-B12-b: The electronic device obtains the i^{th} predicted noise value based on the feature information inputted to the (k+1)^{th} network layer.

In all embodiments of the present disclosure, for the k^{th} network layer of the denoising network, the electronic device fuses the feature information outputted from the k^{th} network layer with at least one of the text feature information of the prompt word and the texture feature information of the fifth liveness attack image, to obtain the feature information inputted to the (k+1)^{th} network layer of the denoising network. For example, the electronic device fuses the feature information outputted from the k^{th} network layer of the denoising network with the text feature information of the prompt word, and uses fused feature information as the feature information inputted to the (k+1)^{th} network layer. For another example, the electronic device fuses the feature information outputted from the k^{th} network layer with the texture feature information of the fifth liveness attack image, and uses fused feature information as the feature information inputted to the (k+1)^{th} network layer of the denoising network. For another example, the electronic device fuses the feature information outputted from the k^{th} network layer with the texture feature information of the fifth liveness attack image and the text feature information of the prompt word, and uses fused feature information as the feature information inputted to the (k+1)^{th} network layer of the denoising network.

In all embodiments of the present disclosure, the electronic device fuses the feature information outputted from the k^{th} network layer with at least one of the text feature information of the prompt word and the texture feature information of the fifth liveness attack image by using an attention mechanism, to obtain the feature information inputted to the (k+1)^{th} network layer.

According to the foregoing operations, the electronic device may determine the feature information outputted from the last network layer of the denoising network. In an example, the electronic device may determine the feature information outputted from the last network layer of the denoising network as the i^{th} predicted noise value.

Then, operation S304-B2 is performed. The (i+1)^{th} denoised feature information of the fifth liveness attack image is obtained based on the i^{th} predicted noise value and the i^{th} denoised feature information of the fifth liveness attack image.

The electronic device uses the determined (i+1)^{th} denoised feature information of the fifth liveness attack image as new i^{th} denoised feature information, and performs operation S304-B1. After N repeated executions, the N^{th} denoised feature information of the fifth liveness attack image is obtained, and the N^{th} denoised feature information is used as the denoised image feature information.

Finally, the electronic device performs operation S304-C, that is, the electronic device decodes the denoised image feature information to obtain the sixth liveness attack image.

In all embodiments of the present disclosure, as shown in FIG. 20, the electronic device decodes the denoised image feature information by using a decoder (for example, a VAE decoder), to obtain the sixth liveness attack image. The sixth liveness attack image is obtained by transforming, based on the prompt word and the texture feature information of the fifth liveness attack image, an initial feature of an object in the fifth liveness attack image into a target feature described by using the prompt word. Therefore, an image generation effect is improved.

For an exemplary implementation process of S304, refer to related descriptions of S204. Details are not described herein again.

According to the training sample generation method provided in all embodiments of the present disclosure, the fifth liveness attack image and the prompt word are obtained, the prompt word being configured for indicating to transform the initial feature of the object in the fifth liveness attack image into the target feature described by using the prompt word. Then, image feature extraction and texture feature extraction are performed on the fifth liveness attack image to obtain the image feature information of the fifth liveness attack image and the texture feature information of the fifth liveness attack image, and text feature extraction is performed on the prompt word to obtain the text feature information of the prompt word. Further, the image feature information of the fifth liveness attack image is processed by using the image generation model and by using the text feature information of the prompt word and the texture feature information of the fifth liveness attack image as the control condition, to obtain the sixth liveness attack image. A loss of the image generation model is determined based on the fifth liveness attack image and the sixth liveness attack image. The image generation model is trained based on the loss. As can be seen, in all embodiments of the present disclosure, when the sixth liveness attack image is generated based on the fifth liveness attack image and the prompt word, the fifth liveness attack image is processed by using the texture feature information of the fifth liveness attack image and the prompt word as the control condition, to generate the sixth liveness attack image, so that the generated sixth liveness attack image not only includes a feature described by using the prompt word, but also preserves a detail feature of the fifth liveness attack image. Therefore, generation quality of the sixth liveness attack image is improved.

The foregoing describes in detail the method embodiments of the present disclosure with reference to FIG. 2 to FIG. 20. The following describes in detail apparatus embodiments of the present disclosure with reference to FIG. 21.

FIG. 21 is a schematic block diagram of an image processing apparatus according to an embodiment of the present disclosure.

As shown in FIG. 21, the image processing apparatus 10 includes:
an obtaining unit 11, configured to obtain a first biometric feature image and a prompt word, the prompt word indicating a preset liveness attack type;
a feature extraction unit 12, configured to extract first image feature information of the first biometric feature image and text feature information of the prompt word;
a determining unit 13, configured to determine second image feature information corresponding to the preset liveness attack type; and
a processing unit 14, configured to input the text feature information, the first image feature information, and the second image feature information to an image generation model, the image generation model being configured for generating, based on the first image feature information, a first liveness attack image conforming to the text feature information and the second image feature information.

In all embodiments of the present disclosure, the determining unit 13 is specifically configured to determine N pieces of candidate image feature information corresponding to the preset liveness attack type, the N pieces of candidate image feature information being image feature information of N liveness attacks that belong to the preset liveness attack type, and N being a positive integer.

In all embodiments of the present disclosure, the N pieces of candidate image feature information or liveness attack feature information of a second liveness attack image is image texture feature information.

In all embodiments of the present disclosure, the determining unit 13 is specifically configured to: obtain the second liveness attack image based on the preset liveness attack type; and extract the liveness attack feature information of the second liveness attack image as the second image feature information.

In all embodiments of the present disclosure, the image generation model includes a denoising network. The processing unit 14 is specifically configured to: perform noise adding on the first image feature information of the first biometric feature image to obtain noise-added feature information of the first biometric feature image; denoise i^{th} denoised feature information of the first biometric feature image by using the denoising network based on the text feature information of the prompt word and the second image feature information, to obtain an i^{th} predicted noise value, i being a positive integer less than or equal to N, and the i^{th} denoised feature information being the noise-added feature information of the first biometric feature image if i is 1; obtain (i+1)^{th} denoised feature information of the first biometric feature image based on the i^{th} predicted noise value and the i^{th} denoised feature information of the first biometric feature image; use the (i+1)^{th} denoised feature information as new i^{th} denoised feature information, and repeatedly perform the above operations to obtain N^{th} denoised feature information of the first biometric feature image; determine the N^{th} denoised feature information as denoised image feature information; and decode the denoised image feature information to obtain the first liveness attack image.

In all embodiments of the present disclosure, the processing unit 14 is specifically configured to: use the i^{th} denoised feature information of the first biometric feature image as feature information inputted to the denoising network; and fuse feature information outputted from a first part of network layers of the denoising network at least with the text feature information of the prompt word, and fuse feature information outputted from a second part of network layers of the denoising network at least with the second image feature information, to obtain the i^{th} predicted noise value.

In all embodiments of the present disclosure, the processing unit 14 is specifically configured to: for a k^{th} network layer of the denoising network, fuse feature information outputted from the k^{th} network layer with at least one of the text feature information of the prompt word and the second image feature information, to obtain feature information inputted to a (k+1)^{th} network layer of the denoising network, k being a positive integer; and obtain the i^{th} predicted noise value based on the feature information inputted to the (k+1)^{th} network layer.

In all embodiments of the present disclosure, the processing unit 14 is specifically configured to input, to an attention module, the text feature information of the prompt word as a key value of the attention module, the second image feature information as a representative value of the attention module, and the feature information outputted from the k^{th} network layer as a query value of the attention module, and perform fusion to obtain the feature information inputted to the (k+1)^{th} network layer.

In all embodiments of the present disclosure, the feature extraction unit 12 is specifically configured to: preprocess the first biometric feature image to obtain a preprocessed first biometric feature image; and perform image feature extraction on the preprocessed first biometric feature image to obtain the first image feature information of the first biometric feature image.

In all embodiments of the present disclosure, the feature extraction unit 12 is specifically configured to: perform image matting on the first biometric feature image to extract an object region in the first biometric feature image; adjust a size of the object region to a first size; and center-crop the object region of the first size to a second size, to obtain a preprocessed first biometric feature image.

The apparatus embodiment and the method embodiment may correspond to each other. For similar descriptions, refer to the method embodiment. To avoid repetition, details are not described herein again. Specifically, the apparatus shown in FIG. 21 may perform the embodiment of the image processing method, and the foregoing and other operations and/or functions of the modules of the apparatus are for implementing the method embodiment. For brevity, details are not described herein.

FIG. 22 is a schematic block diagram of a model training apparatus according to an embodiment of the present disclosure.

As shown in FIG. 22, the model training apparatus 20 includes:
an obtaining unit 21, configured to obtain a training image and a prompt word, the prompt word indicating a preset liveness attack type, and the training image being a biometric feature image or a liveness attack image;
a feature extraction unit 22, configured to extract first image feature information of the training image and text feature information of the prompt word;
a determining unit 23, configured to determine second image feature information corresponding to the preset liveness attack type;
a processing unit 24, configured to input the text feature information of the prompt word, the first image feature information, and the second image feature information to an image generation model, the image generation model being configured for generating, based on the first image feature information, a third liveness attack image conforming to the text feature information and the second image feature information; and
a training unit 25, configured to determine a loss of the image generation model based on the third liveness attack image and the second image feature information, and train the image generation model based on the loss.

In all embodiments of the present disclosure, the determining unit 23 is specifically configured to determine N pieces of candidate image feature information corresponding to the preset liveness attack type, the N pieces of candidate image feature information being image feature information of N liveness attacks that belong to the preset liveness attack type, and N being a positive integer; and select one piece of candidate image feature information from the N pieces of candidate image feature information as the second image feature information.

In all embodiments of the present disclosure, the determining unit 23 is specifically configured to: extract, if the training image is a liveness attack image, liveness attack feature information of the training image as the second image feature information.

In all embodiments of the present disclosure, the determining unit 23 is specifically configured to obtain a fourth liveness attack image based on the preset liveness attack type, and extract liveness attack feature information of the fourth liveness attack image as the second image feature information.

In all embodiments of the present disclosure, the training unit 25 is specifically configured to: perform liveness attack feature extraction on the third liveness attack image to obtain liveness attack feature information of the third liveness attack image; and determine the loss of the image generation model based on the second image feature information and the liveness attack feature information of the third liveness attack image.

In all embodiments of the present disclosure, if the second image feature information is texture feature information of the training image, the training unit 25 is specifically configured to: perform texture feature extraction on the third liveness attack image to obtain texture feature information of the third liveness attack image; and determine the loss of the image generation model based on the texture feature information of the training image and the texture feature information of the third liveness attack image.

In all embodiments of the present disclosure, the training unit 25 is specifically configured to: determine a difference between the texture feature information of the training image and the texture feature information of the third liveness attack image; and determine the loss of the image generation model based on the difference.

In all embodiments of the present disclosure, the feature extraction unit 22 is specifically configured to: preprocess the training image to obtain a preprocessed training image; and perform image feature extraction on the preprocessed training image to obtain the first image feature information of the training image.

In all embodiments of the present disclosure, the feature extraction unit 22 is specifically configured to: perform image matting on the training image to extract an object region in the training image; adjust a size of the object region to a first size; and crop the object region of the first size randomly to a second size, to obtain a preprocessed training image.

The apparatus embodiment and the method embodiment may correspond to each other. For similar descriptions, refer to the method embodiment. To avoid repetition, details are not described herein again. Specifically, the apparatus shown in FIG. 22 may perform the embodiment of the model training method, and the foregoing and other operations and/or functions of the modules of the apparatus are for implementing the method embodiment. For brevity, details are not described herein.

The foregoing describes the apparatuses of the embodiments of the present disclosure with reference to the drawings from a perspective of a functional module. The functional module may be implemented in a form of hardware, may be implemented in a form of software, or may be implemented in a combination of hardware and a software module. Specifically, the operations in the method embodiments in all embodiments of the present disclosure may be directly completed by using a hardware integrated logic circuit in a processor and/or instructions in a software form. The operations of the method disclosed with reference to the embodiments of the present disclosure may be directly performed and completed by using a hardware decoding processor, or may be performed and completed by using a combination of hardware in a decoding processor and a software module. In all embodiments of the present disclosure, the software module may be located in a mature storage medium in the art, such as a random access memory, a flash memory, a read-only memory, a programmable read-only memory, an electrically erasable programmable memory, and a register. The storage medium is located in a memory. The processor reads information in the memory, and completes the operations in the foregoing method embodiments in combination with the hardware of the processor.

FIG. 23 is a schematic block diagram of an electronic device according to an embodiment of the present disclosure. The electronic device may be the foregoing terminal device or server.

As shown in FIG. 23, the electronic device 40 may include:
a memory 41 and a processor 42, where the memory 41 is configured to store a computer program 43 and transmit the computer program 43 to the processor 42, in other words, the processor 42 may invoke the computer program 43 from the memory 41 and run the computer program 43 to implement the method in all embodiments of the present disclosure.

For example, the processor 42 may be configured to perform the operations in the method according to instructions in the computer program 43.

In all embodiments of the present disclosure, the processor 42 may include but not limited to:
a general-purpose processor, a digital signal processor (DSP), an application-specific integrated circuit (ASIC), a field programmable gate array (FPGA) or another programmable logic device, a discrete gate or transistor logic device, a discrete hardware component, and the like.

In all embodiments of the present disclosure, the memory 41 includes but is not limited to:
a volatile memory and/or a non-volatile memory, where the non-volatile memory may be a read-only memory (ROM), a programmable ROM (PROM), an erasable PROM (EPROM), an electrically EPROM (EEPROM), or a flash memory; the volatile memory may be a random access memory (RAM), used as an external cache; and by way of example and not restrictive description, many forms of RAMs may be used, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM).

In all embodiments of the present disclosure, the computer program 43 may be divided into one or more modules, and the one or more modules are stored in the memory 41 and executed by the processor 42 to complete the methods provided in all embodiments of the present disclosure. The one or more modules may be a series of computer program instruction segments that can implement specific functions. The instruction segments are configured for describing an execution process of the computer program 43 in the electronic device.

As shown in FIG. 23, the electronic device 40 may further include:
a transceiver 44, where the transceiver 44 may be connected to the processor 42 or the memory 41.

The processor 42 may control the transceiver 44 to communicate with another device. Specifically, the processor may transmit information or data to the another device or receive information or data from the another device. The transceiver 44 may include a transmitter and a receiver. The transceiver 44 may further include an antenna, and there may be one or more antennas.

The components of the electronic device 40 are connected by using a bus system. In addition to a data bus, the bus system further includes a power bus, a control bus, and a status signal bus.

According to an aspect of the present disclosure, a computer storage medium is provided. The computer storage medium has a computer program stored therein. When the computer program is executed by a computer, the computer is enabled to perform the method in the method embodiments. Alternatively, an embodiment of the present disclosure further provides a computer program product including instructions. When executed by a computer, the instructions enable the computer to perform the method in the method embodiments.

According to another aspect of the present disclosure, a computer program product or a computer program is provided. The computer program product or the computer program includes computer instructions. The computer instructions are stored in a computer-readable storage medium. A processor of a computer device reads the computer instructions from the computer-readable storage medium. The processor executes the computer instructions, so that the computer device performs the method in the method embodiments.

In other words, when software is used to implement the embodiments, all or a part of the embodiments may be implemented in a form of a computer program product. The computer program product includes one or more computer instructions. When the computer instructions are loaded and executed on a computer, all or a part of the procedures or functions according to the embodiments of the present disclosure are generated. The computer may be a general-purpose computer, a dedicated computer, a computer network, or another programmable apparatus. The computer instructions may be stored in the computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state disk (SSD)), or the like.

A person of ordinary skill in the art may realize that the modules and the algorithm operations in each example described with reference to the embodiments disclosed in the present disclosure may be implemented by electronic hardware or a combination of computer software and electronic hardware. Whether these functions are executed by hardware or software depends on specific applications and design constraints of the technical solutions. A person skilled in the art may use different methods to implement the described functions for each particular application, but it shall not be considered that the implementation goes beyond the scope of the present disclosure.

In all embodiments provided in the present disclosure, the disclosed system, apparatus, and method may be implemented in other manners. For example, the foregoing apparatus embodiments are merely examples. For example, division into the modules is merely logical function division, and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electrical, mechanical, or other forms.

The modules described as separate parts may or may not be physically separate, and parts displayed as modules may or may not be physical modules, and may be located at one position, or may be distributed on a plurality of network units. A part or all of the modules may be selected based on actual requirements to achieve the objectives of the solutions of the embodiments. For example, the functional modules in all embodiments of the present disclosure may be integrated into one processing module, the functional modules may exist alone physically, or two or more modules may be integrated into one module.

The above descriptions are merely specific implementations of the present disclosure, and are not intended to limit the protection scope of the present disclosure. Any variation or replacement readily figured out by a person skilled in the art within the technical scope disclosed in the present disclosure falls within the protection scope of the present disclosure. Therefore, the protection scope of the present disclosure shall be subject to the protection scope of the claims.

## Claims

1. An image processing method, comprising:
obtaining a first biometric feature image and a prompt word, the prompt word indicating a preset liveness attack type;
extracting first image feature information of the first biometric feature image and text feature information of the prompt word;
determining second image feature information of the preset liveness attack type; and
inputting the text feature information, the first image feature information, and the second image feature information to an image generation model;
generating, by the image generation model, based on the first image feature information, a first liveness attack image conforming to the text feature information and the second image feature information.

2. The method according to claim 1, wherein the determining second image feature information of the preset liveness attack type comprises:
determining N pieces of candidate image feature information of the preset liveness attack type, the N pieces of candidate image feature information being image feature information of N liveness attacks that belong to the preset liveness attack type, and N being a positive integer; and
selecting one piece of candidate image feature information from the N pieces of candidate image feature information as the second image feature information.

3. The method according to claim 1, wherein the determining second image feature information corresponding to the preset liveness attack type comprises:
obtaining a second liveness attack image based on the preset liveness attack type; and
extracting liveness attack feature information of the second liveness attack image as the second image feature information.

4. The method according to claim 2 or 3, wherein the N pieces of candidate image feature information or the liveness attack feature information of the second liveness attack image is image texture feature information.

5. The method according to any one of claims 1 to 4, wherein the image generation model comprises a denoising network; and the inputting the text feature information, the first image feature information, and the second image feature information to the image generation model, the image generation model being configured for generating, based on the first image feature information, the first liveness attack image conforming to the text feature information and the second image feature information comprises:
performing noise adding on the first image feature information to obtain noise-added feature information of the first biometric feature image;
denoising i^{th} denoised feature information of the first biometric feature image by using the denoising network based on the text feature information of the prompt word and the second image feature information, to obtain an i^{th} predicted noise value, i being a positive integer less than or equal to N, and when i is 1, the i^{th} denoised feature information being the noise-added feature information of the first biometric feature image;
obtaining (i+1)^{th} denoised feature information of the first biometric feature image based on the i^{th} predicted noise value and the i^{th} denoised feature information of the first biometric feature image;
using the (i+1)^{th} denoised feature information as new i^{th} denoised feature information, and repeatedly performing the above operations until N^{th} denoised feature information of the first biometric feature image is obtained;
determining the N^{th} denoised feature information as denoised image feature information; and
decoding the denoised image feature information to obtain the first liveness attack image.

6. The method according to claim 5, wherein the denoising i^{th} denoised feature information of the first biometric feature image by using the denoising network based on the text feature information of the prompt word and the second image feature information, to obtain the i^{th} predicted noise value comprises:
using the i^{th} denoised feature information of the first biometric feature image as feature information inputted to the denoising network; and
fusing feature information outputted from a first part of network layers of the denoising network with the text feature information of the prompt word, and fusing feature information outputted from a second part of network layers of the denoising network with the second image feature information, to obtain the i^{th} predicted noise value.

7. The method according to claim 6, wherein the fusing feature information outputted from the first part of network layers of the denoising network with the text feature information of the prompt word, and fusing feature information outputted from the second part of network layers of the denoising network with the second image feature information, to obtain the i^{th} predicted noise value comprises:
fusing, for a k^{th} network layer of the denoising network, feature information outputted from the k^{th} network layer with at least one of the text feature information of the prompt word or the second image feature information, to obtain feature information inputted to a (k+1)^{th} network layer of the denoising network, k being a positive integer; and
obtaining the i^{th} predicted noise value based on the feature information inputted to the (k+1)^{th} network layer.

8. The method according to claim 7, wherein the fusing feature information outputted from the k^{th} network layer with at least one of the text feature information of the prompt word and or second image feature information, to obtain feature information inputted to a (k+1)^{th} network layer of the denoising network comprises:
inputting, to an attention module, the text feature information of the prompt word as a key value of the attention module, the second image feature information as a representative value of the attention module, and the feature information outputted from the k^{th} network layer as a query value of the attention module, and performing fusion to obtain the feature information inputted to the (k+1)^{th} network layer.

9. The method according to any one of claims 1 to 8, wherein before the extracting first image feature information of the first biometric feature image, the method further comprises:
performing image matting on the first biometric feature image to extract an object region in the first biometric feature image;
adjusting a size of the object region to a first size; and
center-cropping the object region of the first size to a second size, to obtain a preprocessed first biometric feature image; and
the extracting first image feature information of the first biometric feature image comprises:
performing image feature extraction on the preprocessed first biometric feature image to obtain the first image feature information of the first biometric feature image.

10. A model training method, comprising:
obtaining a training image and a prompt word, the prompt word indicating a preset liveness attack type, and the training image being a biometric feature image or a liveness attack image;
extracting first image feature information of the training image and text feature information of the prompt word;
determining second image feature information of the preset liveness attack type;
inputting the text feature information of the prompt word, the first image feature information, and the second image feature information to an image generation model, the image generation model being configured for generating, based on the first image feature information, a third liveness attack image conforming to the text feature information and the second image feature information; and
determining a loss of the image generation model based on the third liveness attack image and the second image feature information, and training the image generation model based on the loss.

11. The method according to claim 10, wherein the determining second image feature information of the preset liveness attack type comprises:
determining N pieces of candidate image feature information of the preset liveness attack type, the N pieces of candidate image feature information being image feature information of N liveness attacks that belong to the preset liveness attack type, and N being a positive integer; and
selecting one piece of candidate image feature information from the N pieces of candidate image feature information as the second image feature information.

12. The method according to claim 10, wherein the determining second image feature information corresponding to the preset liveness attack type comprises:
extracting, in response to the training image being a liveness attack image, liveness attack feature information of the training image as the second image feature information

13. The method according to claim 10, wherein the determining second image feature information corresponding to the preset liveness attack type comprises:
obtaining a fourth liveness attack image based on the preset liveness attack type; and
extracting liveness attack feature information of the fourth liveness attack image as the second image feature information.

14. The method according to any one of claims 10 to 13, wherein the determining the loss of the image generation model based on the third liveness attack image and the second image feature information comprises:
performing liveness attack feature extraction on the third liveness attack image to obtain liveness attack feature information of the third liveness attack image; and
determining the loss of the image generation model based on the second image feature information and the liveness attack feature information of the third liveness attack image.

15. The method according to claim 14, wherein the second image feature information includes texture feature information of the training image, the performing liveness attack feature extraction on the third liveness attack image to obtain liveness attack feature information of the third liveness attack image comprises:
performing texture feature extraction on the third liveness attack image to obtain texture feature information of the third liveness attack image; and
the determining the loss of the image generation model based on the second image feature information and the liveness attack feature information of the third liveness attack image comprises:
determining the loss of the image generation model based on the texture feature information of the training image and the texture feature information of the third liveness attack image.

16. The method according to claim 15, wherein the determining the loss of the image generation model based on the texture feature information of the training image and the texture feature information of the third liveness attack image comprises:
determining a difference between the texture feature information of the training image and the texture feature information of the third liveness attack image; and
determining the loss of the image generation model based on the difference.

17. The method according to any one of claims 10 to 16, wherein before the extracting first image feature information of the training image, the method further comprises:
performing image matting on the training image to extract an object region in the training image;
adjusting a size of the object region to a first size; and
cropping the object region of the first size randomly to a second size, to obtain a preprocessed training image; and
the extracting first image feature information of the training image comprises:
performing image feature extraction on the preprocessed training image to obtain the first image feature information of the training image.

18. An image processing apparatus, comprising:
an obtaining unit, configured to obtain a first biometric feature image and a prompt word, the prompt word indicating a preset liveness attack type;
a feature extraction unit, configured to extract first image feature information of the first biometric feature image and text feature information of the prompt word;
a determining unit, configured to determine second image feature information corresponding to the preset liveness attack type; and
a processing unit, configured to input the text feature information, the first image feature information, and the second image feature information to an image generation model, the image generation model being configured for generating, based on the first image feature information, a first liveness attack image conforming to the text feature information and the second image feature information.

19. A model training apparatus, comprising:
an obtaining unit, configured to obtain a training image and a prompt word, the prompt word indicating a preset liveness attack type, and the training image being a biometric feature image or a liveness attack image;
a feature extraction unit, configured to extract first image feature information of the training image and text feature information of the prompt word;
a determining unit, configured to determine second image feature information corresponding to the preset liveness attack type;
a processing unit, configured to input the text feature information of the prompt word, the first image feature information, and the second image feature information to an image generation model, the image generation model being configured for generating, based on the first image feature information, a third liveness attack image conforming to the text feature information and the second image feature information; and
a training unit, configured to determine a loss of the image generation model based on the second image feature information and the third liveness attack image, and train the image generation model based on the loss.

20. An electronic device, comprising a processor and a memory,
the memory being configured to store a computer program; and
the processor being configured to execute the computer program to implement the method according to any one of claims 1 to 9 or 10 to 17.

21. A computer-readable storage medium, configured to store a computer program,
the computer program causing a computer to perform the method according to any one of claims 1 to 9 or 10 to 17.

22. A computer program product, comprising computer instructions, the computer instructions, when executed by a processor, causing the method according to any one of claims 1 to 9 or 10 to 17 to be implemented.
